# EUROPEAN PATENT APPLICATION

(11) **EP 4 373 205 A2**
(43) Date of publication of application: **22.05.2024**
(21) Application number: 23210570.0
(22) Date of filing: 30.09.2018
(51) Int. Cl.: H04W 76/14

(54) **FILE TRANSFER METHOD AND ELECTRONIC DEVICE**

(62) Divisional of application: 18935361.8
(71) Applicant: HUAWEI TECHNOLOGIES CO., LTD., Shenzhen Guangdong 518129 (CN)
(72) Inventor: ZHANG, Dapeng, SHENZHEN, 518129 (CN); WANG, Chuntao, SHENZHEN, 518129 (CN); CHEN, Chen, SHENZHEN, 518129 (CN); ZHENG, Leilei, SHENZHEN, 518129 (CN)
(74) Representative: Körber, Martin Hans

(57) **Abstract**

A file transfer method and an electronic device are provided, and relate to the field of communications technologies, to avoid file mis-transfer and improve file transfer accuracy. The method includes: displaying, by a first device, a first interface, namely, a graphical user interface of a first application (S301); when a distance between a first NFC chip and an electronic tag or a second NFC chip of a second device is less than a preset threshold, obtaining a Bluetooth address of the second device (S303); determining that the first device is currently in a first scenario (S308); receiving a second scenario in which the second device is currently located and that is notified by the second device (S311); and when a priority of the first scenario is higher than that of the second scenario, transferring a first file corresponding to the first interface to the second device through a communication connection established based on the Bluetooth address (S312 and S313); or when a priority of the first scenario is lower than that of the second scenario, receiving a second file that corresponds to a second interface and that is sent by the second device through a communication connection established based on the Bluetooth address (S316).

## Description

### TECHNICAL FIELD

Embodiments of this application relate to the field of communications technologies, and in particular, to a file transfer method and an electronic device.

### BACKGROUND

With development of communications technologies, there are an increasing quantity of short-range file transfer manners. For example, a file may be transferred between devices through Bluetooth, a wireless fidelity (wireless fidelity, Wi-Fi) direct connection (that is, a Wi-Fi direct connection), or near field communication (near field communication, NFC).

An NFC contact-based transfer manner is widely used because of convenience. Both devices (for example, a device 1 and a device 2) between which a file is transferred through NFC contact are provided with NFC chips.

A process of transferring a file through NFC contact may include: The device 1 selects a to-be-shared file (for example, a picture) in response to a user operation. The device 1 enables an NFC contact function (for example, enables Android Beam) in response to a user operation. The NFC chip of the device 1 contacts the NFC chip of the device 2, to implement Bluetooth pairing and connection between the device 1 and the device 2. In response to a user operation, the device 1 transfers the to-be-shared file to the device 2 through a Bluetooth connection between the device 1 and the device 2.

However, user operations are cumbersome in the foregoing process of transferring the file through NFC contact. To simplify user operations, some users expect that a file can be automatically transferred when the NFC chip of the device 1 contacts the NFC chip of the device 2. However, a data transfer direction may be incorrectly determined during automatic transfer through NFC contact. For example, a user wants the device 1 to transfer a file to the device 2, but the device 2 transfers a file to the device 1 during automatic transfer by the devices.

### SUMMARY

Embodiments of this application provide a file transfer method and an electronic device, to avoid file mis-transfer and improve file transfer accuracy.

According to a first aspect, an embodiment of this application provides a file transfer method. The file transfer method may be applied to a process of transferring a file between a first device and a second device. The first device is provided with a first NFC chip, the second device is provided with an electronic tag or a second NFC chip, the electronic tag includes device information of the second device, and the device information includes a Bluetooth address or a tag ID used to obtain a Bluetooth address. The file transfer method may include: The first device displays a first interface, where the first interface is a graphical user interface of a first application. When a distance between the first NFC chip and the electronic tag or the second NFC chip is less than a preset threshold, the first device may obtain the device information of the second device. The first device determines that the first device is currently in a first scenario. The first device receives a second scenario in which the second device is currently located and that is notified by the second device. After the communication connection is established, when a priority of the first scenario is higher than that of the second scenario, the first device automatically transfers a first file corresponding to the currently displayed first interface to the second device through the communication connection established based on the device information; or when a priority of the first scenario is lower than that of the second scenario, the first device receives a second file that corresponds to a second interface and that is automatically sent by the second device through the communication connection established based on the device information.

It should be noted that, before the first device approaches the second device (that is, before the distance between the first NFC chip and the electronic tag or the second NFC chip is less than the preset threshold), the first device may have established a communication connection to the second device. In this case, after obtaining the device information of the second device, the first device does not need to establish a communication connection to the second device, and instead, the first device or the second device may directly transfer a file after a file transfer direction is determined.

Before the first device approaches the second device, if the first device does not establish a communication connection to the second device, after obtaining the device information of the second device, the first device may establish a communication connection to the second device. After the first device establishes the communication connection to the second device and the file transfer direction is determined, the first device or the second device may transfer a file.

With reference to the first aspect, in a possible design manner, the device information may include the Bluetooth address or the tag ID used to obtain the Bluetooth address. That the first device obtains the device information of the second device when a distance between the first NFC chip and the electronic tag or the second NFC chip is less than a preset threshold may specifically include: When the distance between the first NFC chip of the first device and the electronic tag or the second NFC chip of the second device is less than the preset threshold, the first device obtains the Bluetooth address of the second device.

In this embodiment of this application, the first device may determine the scenario (for example, the first scenario) in which the first device is currently located, and then receive the scenario (for example, the second scenario) in which the second device is located and that is notified by the second device. The first device may store priorities of a plurality of preset scenarios, and the plurality of preset scenarios include the first scenario and the second scenario. Then, the first device may compare the priorities of the first scenario and the second scenario, and determine the file transfer direction based on the priorities of the first scenario and the second scenario. For example, when the priority of the first scenario is higher than that of the second scenario, the first device transfers a file to the second device. When the priority of the second scenario is higher than that of the first scenario, the second device transfers a file to the first device. The file transfer direction is determined based on the priorities of the scenarios in which the two electronic devices are located, to improve accuracy of the file transfer direction, avoid file mis-transfer, and improve file transfer accuracy.

With reference to the first aspect, in a possible design manner, the priority of the first scenario may be the same as that of the second scenario. In this case, the first device may display a third interface, and a user selects the file transfer direction in the third interface. The third interface is used to determine whether the first device transfers a file to the second device or the second device transfers a file to the first device. After the first device displays the third interface, the first device may receive a first operation used to indicate the first device to transfer a file to the second device, or may receive a second operation used to indicate the second device to transfer a file to the first device. In response to the first operation, the first device may automatically transfer the first file corresponding to the first interface to the second device through the communication connection established based on the Bluetooth address.

In response to the second operation, the first device may automatically send a notification message to the second device, to indicate the second device to transfer a file to the first device. After receiving the notification message, the second device may send the second file corresponding to the second interface to the first device in response to the notification message. The first device may receive the second file that is sent by the second device through the communication connection established based on the Bluetooth address.

In this embodiment of this application, the first device may display the third interface when the priority of the first scenario is the same as that of the second scenario, and the user selects the file transfer direction in the third interface.

With reference to the first aspect, in another possible design manner, the first device stores scenario information and a priority of each of a plurality of scenarios. The scenario information includes at least any one of application identification information and user operation information. The plurality of scenarios include the first scenario and the second scenario.

In this way, the first device may determine the first scenario from the plurality of scenarios by determining whether application identification information of the first application matches the application identification information of each scenario, and/or determining whether user operation information corresponding to the first interface matches the user operation information of each scenario.

With reference to the first aspect or the foregoing possible design manners, in a design manner (1), the scenario information of each scenario may include the application identification information. The method in which the first device determines that the first device is currently in the first scenario may include: The first device obtains the application identification information of the first application to which the first interface belongs. When the application identification information of the first application matches application identification information in the first scenario, the first device determines that the first device is currently in the first scenario. That the application identification information of the first application matches the application identification information in the first scenario specifically means that the application identification information of the first application is the same as application identification information included in the scenario information in the first scenario.

In the design manner (1), the plurality of preset scenarios include a scenario 1 and a scenario 2. A priority of the scenario 1 is higher than that of the scenario 2.

Application identification information in the scenario 1 includes application identification information of at least one preset identifiable application. Application identification information in the scenario 2 includes application identification information corresponding to a non-identifiable application. The first device may determine, based on the application identification information, whether the first application is an identifiable application. In other words, one or more applications may be preset as one or more identifiable applications, and each application corresponds to one piece of application identification information. The first device may determine, based on the application identification information, whether an application is an identifiable application. If the first application is an identifiable application, the first device is in the scenario 1, that is, the first scenario is the scenario 1. If the first application is not an identifiable application, that is, if the first application is a non-identifiable application, the first device is in the scenario 2, that is, the first scenario is the scenario 2.

It may be understood that a graphical user interface of an identifiable application includes a file that can be transferred to another electronic device in, and a graphical user interface of a non-identifiable application does not include a file that can be transferred to another electronic device. Therefore, a possibility that an electronic device sends a file to another electronic device in the scenario 1 (or referred to as an identifiable scenario) is higher than a possibility that the electronic device sends a file to another electronic device in the scenario 2 (or referred to as a non-identifiable scenario). The priority of the scenario 1 (that is, the identifiable scenario) is higher than that of the scenario 2 (that is, the non-identifiable scenario).

For example, the identifiable application may be a "Gallery" application or a "Photos" application, and the non-identifiable application is an application other than the "Gallery" application and the "Photos" application. When the first device displays a graphical user interface of the "Gallery" application or the "Photos" application, the first device is currently in the scenario 1. When the first device displays a graphical user interface of the application other than the "Gallery" application and the "Photos" application, the first device is currently in the scenario 2. It should be noted that an application (an identifiable application or a non-identifiable application) described in this embodiment of this application may be in different forms based on a type of the first device. For example, when the first device is an intelligent terminal (for example, a mobile phone or a tablet computer) running an Android system, an iOS system, a Windows Phone system, or the like, the application may be an application installed on the terminal. When the first device is a personal computer (PC)-type terminal, the application may be content in an interface currently displayed by the terminal. For example, when the user browses a picture or a photo by using the PC, it may be considered that the PC currently runs an identifiable application. Alternatively, when the user opens, by using the PC, a folder including one or more pictures or photos, it may also be considered that the PC currently runs an identifiable application.

When the first device currently displays the graphical user interface of the "Gallery" application or the "Photos" application, and the second device currently displays a graphical user interface of another application, the file transfer direction between the first device and the second device is that the first device transfers a file to the second device. In this case, the first device may send, to the second device, a picture corresponding to the graphical user interface currently displayed by the first device.

With reference to the first aspect or the foregoing possible design manners, in a design manner (2), the scenario information includes the user operation information. The method in which the first device determines that the first device is currently in the first scenario may include: The first device obtains the user operation information corresponding to the first interface. The user operation information corresponding to the first interface includes a moment at which the first device starts to display the first interface, or a moment at which the first device starts to display the first interface and a user operation received after the first device displays the first interface, or a user operation received by the first device within a third preset time period, where an end moment of the third preset time period is a current moment. When the user operation information corresponding to the first interface matches user operation information in the first scenario, the first device determines that the first device is currently in the first scenario.

In a case of the design manner (2), the user operation information corresponding to the first interface includes the moment at which the first device starts to display the first interface, or the moment at which the first device starts to display the first interface and the user operation received after the first device displays the first interface.

In this case, the plurality of preset scenarios include a scenario 1, a scenario 2, a scenario 3, and a scenario 4. A priority of the scenario 1 is higher than that of the scenario 2. The priority of the scenario 2 is higher than that of the scenario 3. The priority of the scenario 3 is higher than that of the scenario 4.

User operation information in the scenario 1 includes: An electronic device receives, within a first preset time period, a third operation used to trigger the electronic device to display a current interface, where the first preset time period is a time period before a first moment, an end moment of the first preset time period is the first moment, and the first moment is a moment at which the electronic device displays the current interface.

User operation information in the scenario 2 includes: The electronic device receives, within a second preset time period, the third operation used to trigger the electronic device to display the current interface, and the electronic device receives a fourth operation after displaying the current interface, where the second preset time period is another time period before the first preset time period, and an end moment of the second preset time period is a start moment of the first preset time period.

User operation information in the scenario 3 includes: The electronic device receives, within the second preset time period, the third operation used to trigger the electronic device to display the current interface, and the electronic device does not receive the fourth operation after displaying the current interface.

User operation information in the scenario 4 includes: The electronic device receives a fifth operation on a message from another electronic device, and the electronic device displays the current interface in response to the fifth operation.

In this case, the method in which when the user operation information corresponding to the first interface matches the user operation information in the first scenario, the first device determines that the first device is currently in the first scenario may include: If the user operation information corresponding to the first interface indicates that the first device receives, within the first preset time period, the third operation used to trigger the first device to display the first interface, the first device determines that the first device is currently in the scenario 1, where the first scenario is the scenario 1. If the user operation information corresponding to the first interface indicates that the first device displays the first interface in response to the fifth operation, the first device determines that the first device is currently in the scenario 4, where the first scenario is the scenario 4. If the user operation information corresponding to the first interface indicates that the first device receives, within the second preset time period, the third operation used to trigger the first device to display the first interface, and the first device receives the fourth operation after displaying the first interface, the first device determines that the first device is currently in the scenario 2, where the first scenario is the scenario 2. If the user operation information corresponding to the first interface indicates that the first device receives, within the second preset time period, the third operation used to trigger the first device to display the first interface, and the first device does not receive the fourth operation after displaying the first interface, the first device determines that the first device is currently in the scenario 3, where the first scenario is the scenario 3.

It can be learned from characteristics of the user operation information in the scenario 1 to the scenario 4 that, when the electronic device is in the scenario 1, a moment at which the electronic device starts to display the current interface is closest to the current moment. In other words, the electronic device starts to display the current interface at a latest moment. Therefore, the scenario 1 has a highest priority, and the scenario 1 may alternatively be referred to as a latest enabled scenario. When the electronic device is in the scenario 2, a moment at which the electronic device starts to display the current interface is earlier than the moment at which the electronic device starts to display the current interface in the scenario 1. Therefore, a possibility that the electronic device sends a file to another electronic device in the scenario 1 is higher than a possibility that the electronic device sends a file to another electronic device in the scenario 2. Therefore, the priority of the scenario 1 is higher than that of the scenario 2. The scenario 2 may alternatively be referred to as a recently active scenario. In the scenario 2, after displaying the current interface, the electronic device further receives the fourth operation performed by the user. However, in the scenario 3, after displaying the current interface, the electronic device does not receive the fourth operation performed by the user. Therefore, the possibility that the electronic device sends a file to another electronic device in the scenario 2 is higher than a possibility that the electronic device sends a file to another electronic device in the scenario 3. Therefore, the priority of the scenario 2 is higher than that of the scenario 3. The scenario 3 may alternatively be referred to as a recently inactive scenario. In the scenario 4, the electronic device passively displays the current interface. Therefore, a possibility that the electronic device sends a file to another electronic device in the scenario 4 is lower than the possibility that the electronic device sends a file to another electronic device in any one of the scenario 1 to the scenario 3. The scenario 4 may alternatively be referred to as a passively enabled scenario.

In another case of the design manner (2), the user operation information corresponding to the first interface includes the user operation received by the first device within the third preset time period, where the end moment of the third preset time period is the current moment.

In this case, the plurality of preset scenarios include a scenario 1 and a scenario 2. A priority of the scenario 1 is higher than that of the scenario 2. User operation information in the scenario 1 includes: An electronic device receives a user operation within the third preset time period. User operation information in the scenario 2 includes: The electronic device does not receive a user operation within the third preset time period.

The electronic device receives a user operation within the third preset time period in the scenario 1, but the electronic device does not receive a user operation within the third preset time period in the scenario 2. Therefore, a possibility that the electronic device sends a file to another electronic device in the scenario 1 is higher than a possibility that the electronic device sends a file to another electronic device in the scenario 2. Therefore, the priority of the scenario 1 is higher than that of the scenario 2.

With reference to the first aspect or the foregoing possible design manners, in a design manner (3), the scenario information includes the application identification information and the user operation information. The method in which the first device determines that the first device is currently in the first scenario may include: The first device obtains the application identification information of the first application. The first device obtains the user operation information corresponding to the first interface. The user operation information corresponding to the first interface includes a moment at which the first device starts to display the first interface, or a moment at which the first device starts to display the first interface and a user operation received after the first device displays the first interface. When the application identification information of the first application matches application identification information in the first scenario and the user operation information corresponding to the first interface matches user operation information in the first scenario, the first device determines that the first device is currently in the first scenario.

In the design manner (3), the plurality of preset scenarios include two or more of the following scenarios: a scenario 1, a scenario 2, a scenario 3, a scenario 4, and a scenario 5. A priority of the scenario 1 is higher than that of the scenario 2, the priority of the scenario 2 is higher than that of the scenario 3, the priority of the scenario 3 is higher than that of the scenario 4, and the priority of the scenario 4 is higher than that of the scenario 5.

Application identification information in the scenario 1 includes application identification information of at least one preset identifiable application, and user operation information in the scenario 1 includes: An electronic device receives, within a first preset time period, a third operation used to trigger the electronic device to display a current interface, where the first preset time period is a time period before a first moment, an end moment of the first preset time period is the first moment, and the first moment is a moment at which the electronic device displays the current interface.

Application identification information in the scenario 2 includes application identification information of at least one preset identifiable application, and user operation information in the scenario 2 include: The electronic device receives, within a second preset time period, the third operation used to trigger the electronic device to display the current interface, and the electronic device receives a fourth operation after displaying the current interface, where the second preset time period is another time period before the first preset time period, and an end moment of the second preset time period is a start moment of the first preset time period.

Application identification information in the scenario 3 includes application identification information of at least one preset identifiable application, and user operation information in the scenario 3 includes: The electronic device receives, within the second preset time period, the third operation used to trigger the electronic device to display the current interface, and the electronic device does not receive the fourth operation after displaying the current interface.

Application identification information in the scenario 4 includes application identification information corresponding to a non-identifiable application, and user operation information in the scenario 4 has no requirement on whether the electronic device receives a user operation or a moment at which the electronic device receives a user operation.

Application identification information in the scenario 5 includes application identification information of at least one preset identifiable application, and user operation information in the scenario 5 includes: The electronic device receives a fifth operation on a message from another electronic device, and the electronic device displays the current interface in response to the fifth operation.

In the design manner (3), when the application identification information of the first application matches the application identification information in the first scenario, and the user operation information corresponding to the first interface matches the user operation information in the first scenario, the method in which the first device determines that the first device is currently in the first scenario may include: The first device determines whether the application identification information of the first application matches the identification information of the identifiable application. When the application identification information of the first application does not match the application identification information of the identifiable application, the first device determines that the first device is currently in the scenario 4, where the first scenario is the scenario 4.

When the application identification information of the first application matches the application identification information of any one of the at least one identifiable application, if the user operation information corresponding to the first interface indicates that the first device receives, within the first preset time period, the third operation used to trigger the first device to display the first interface, the first device determines that the first device is currently in the scenario 1, where the first scenario is the scenario 1. If the user operation information corresponding to the first interface indicates that the first device displays the first interface in response to the fifth operation, the first device determines that the first device is currently in the scenario 5, where the first scenario is the scenario 5. If the user operation information corresponding to the first interface indicates that the first device receives, within the second preset time period, the third operation used to trigger the first device to display the first interface, and the first device receives the fourth operation after displaying the first interface, the first device determines that the first device is currently in the scenario 2, where the first scenario is the scenario 2. If the user operation information corresponding to the first interface indicates that the first device receives, within the second preset time period, the third operation used to trigger the first device to display the first interface, and the first device does not receive the fourth operation after displaying the first interface, the first device determines that the first device is currently in the scenario 3, where the first scenario is the scenario 3.

It should be noted that it can be learned from characteristics of the user operation information in the scenario 1 to the scenario 5 that, when the electronic device is in the scenario 1, the current interface displayed by the electronic device is a graphical user interface of an identifiable application, and a moment at which the electronic device starts to display the current interface is closest to the current moment. Therefore, the scenario 1 has a highest priority, and the scenario 1 may alternatively be referred to as a latest enabled identifiable scenario.

When the electronic device is in the scenario 2, the current interface displayed by the electronic device is a graphical user interface of an identifiable application, and a moment at which the electronic device starts to display the current interface is earlier than the moment at which the electronic device starts to display the current interface in the scenario 1. Therefore, a possibility that the electronic device sends a file to another electronic device in the scenario 1 is higher than a possibility that the electronic device sends a file to another electronic device in the scenario 2. Therefore, the priority of the scenario 1 is higher than that of the scenario 2. The scenario 2 may alternatively be referred to as a recently active identifiable scenario. In the scenario 2, after displaying the current interface, the electronic device further receives the fourth operation performed by the user. However, in the scenario 3, after displaying the current interface, the electronic device does not receive the fourth operation performed by the user. Therefore, the possibility that the electronic device sends a file to another electronic device in the scenario 2 is higher than a possibility that the electronic device sends a file to another electronic device in the scenario 3. Therefore, the priority of the scenario 2 is higher than that of the scenario 3. In addition, in the scenario 3, the current interface displayed by the electronic device is a graphical user interface of an identifiable application. The scenario 3 may alternatively be referred to as a recently inactive identifiable scenario.

In the scenario 4, the current interface displayed by the electronic device is a graphical user interface of a non-identifiable application. Therefore, the scenario 4 may alternatively be referred to as a non-identifiable scenario. A possibility that the electronic device sends a file to another electronic device in the scenario 4 is lower than the possibility that the electronic device sends a file to another electronic device in any one of the scenario 1 to the scenario 3. Therefore, the priority of the scenario 4 is lower than that of the scenario 3. In the scenario 5, the electronic device passively displays the current interface. Therefore, a possibility that the electronic device sends a file to another electronic device in the scenario 5 is lower than the possibility that the electronic device sends a file to another electronic device in any one of the scenario 1 to the scenario 4. In addition, in the scenario 5, the current interface displayed by the electronic device is a graphical user interface of a non-identifiable application. Therefore, the scenario 5 may alternatively be referred to as a passively enabled identifiable scenario.

With reference to the first aspect or the foregoing possible design manners, in a design manner (4), the scenario information includes the user operation information. The plurality of preset scenarios may include a scenario 1 and a scenario 2. A priority of the scenario 1 is higher than that of the scenario 2. User operation information in the scenario 1 includes: An electronic device receives a preset user operation (for example, a shake operation or a knock operation) within a fourth preset time period. User operation information in the scenario 2 includes: The electronic device does not receive the preset user operation within the fourth preset time period. The fourth preset time period is a time period using a moment for NFC contact (that is, a moment at which the distance between the first NFC chip and the second NFC chip or the electronic tag is less than the preset threshold) as a start moment or an end moment. In other words, if the electronic device receives the preset user operation within a time period before the moment for NFC contact or within a time period after the moment for NFC contact, the electronic device is in the scenario 1. The electronic device may collect the preset user operation (for example, the shake operation) by using a sensor (for example, an acceleration sensor).

With reference to the first aspect, in another possible design manner, the communication connection established based on the Bluetooth address is a Bluetooth connection. In this case, the first device may send the first file to the second device through the Bluetooth connection between the first device and the second device. Alternatively, the first device may receive the second file sent by the second device through the Bluetooth connection between the first device and the second device. Before the first device or the second device transfers a file, the first device may establish the Bluetooth connection to the second device based on the Bluetooth address.

With reference to the first aspect, in another possible design manner, the communication connection established based on the Bluetooth address is a Wi-Fi connection. In this case, the first device may send the first file to the second device through the Wi-Fi connection between the first device and the second device. Alternatively, the first device may receive the second file sent by the second device through the Wi-Fi connection between the first device and the second device. Before the first device or the second device transfers a file, the first device may establish a Bluetooth connection to the second device based on the Bluetooth address, then exchanges a Wi-Fi connection parameter with the second device through the Bluetooth connection, and finally establishes the Wi-Fi connection to the second device based on the Wi-Fi connection parameter.

With reference to the first aspect, in another possible design manner, the second device is provided with the electronic tag. The device information in the electronic tag includes the Bluetooth address. In this case, when the distance between the first NFC chip and the electronic tag is less than the preset threshold, the first device may directly obtain the Bluetooth address of the second device from the electronic tag.

With reference to the first aspect, in another possible design manner, the second device is provided with the electronic tag. The device information in the electronic tag includes the tag ID, and does not include the Bluetooth address of the second device. In this case, the first device can obtain only the tag ID of the electronic tag from the electronic tag, and then configure a correspondence between the tag ID and the Bluetooth address of the second device based on a user operation, to obtain the Bluetooth address of the second device. The first device may obtain the tag ID from the electronic tag, and search for the Bluetooth address corresponding to the tag ID.

If the first device stores the tag ID and the Bluetooth address corresponding to the tag ID, the first device may find the Bluetooth address corresponding to the tag ID. The first device or the second device may transfer a file through the communication connection established based on the Bluetooth address.

If the first device does not store the tag ID and the Bluetooth address corresponding to the tag ID, the first device does not find the Bluetooth address corresponding to the tag ID. If the first device does not find the Bluetooth address corresponding to the tag ID, the first device may search for a surrounding Bluetooth device, and display a fourth interface. The second interface includes at least one Bluetooth option, and each Bluetooth option corresponds to one Bluetooth device found by the first device. The first device may receive a selection operation performed by the user on a first Bluetooth option in the at least one Bluetooth option, where the first Bluetooth option corresponds to the second device. In response to the selection operation performed by the user on the first Bluetooth option, the first device obtains the Bluetooth address of the second device corresponding to the first Bluetooth option. To be specific, the first device may provide the fourth interface used to select the Bluetooth option corresponding to the second device, and the user selects the Bluetooth option corresponding to the second device, to obtain the Bluetooth address of the second device.

With reference to the first aspect, in another possible design manner, in response to the selection operation performed by the user on the first Bluetooth option, the first device may store the correspondence between the tag ID and the Bluetooth address of the second device. In this way, when the first NFC chip approaches the electronic tag again, the first device can find the Bluetooth address corresponding to the tag ID.

With reference to the first aspect, in another possible design manner, in response to the selection operation performed by the user on the first Bluetooth option, the first device may transfer the Bluetooth address of the second device to the electronic tag through the first NFC chip. After receiving the Bluetooth address of the second device, the electronic tag may store the Bluetooth address of the second device. In this way, when an NFC chip (for example, the first NFC chip) of another device approaches the electronic tag, the NFC chip can directly obtain the Bluetooth address of the second device from the electronic chip.

According to a second aspect, an embodiment of this application provides an electronic device. The electronic device is the first device in the first aspect and the possible design manners of the first aspect. The electronic device includes one or more processors, a memory, a display, a first near field communication NFC chip, and a communications module. The communications module is configured to support the processor in transferring data to a second device. The memory, the display, the communications module, and the first NFC chip are coupled to the processor, and the memory is configured to store information.

Specifically, the display is configured to display a first interface, where the first interface is a graphical user interface of a first application. The processor is configured to: when a distance between the first NFC chip and an electronic tag or a second NFC chip of the second device is less than a preset threshold, obtain device information of the second device through the first NFC chip, where the device information includes a Bluetooth address or a tag ID used to obtain a Bluetooth address, and the electronic tag includes the device information. The communications module is configured to establish a communication connection to the second device based on the device information of the second device. The processor is further configured to: determine that the first device is currently in a first scenario, and receive a second scenario in which the second device is currently located and that is notified by the second device. The processor is further configured to: compare a priority of the first scenario with that of the second scenario; and when the priority of the first scenario is higher than that of the second scenario, automatically transfer a first file corresponding to the first interface to the second device through a communication connection established by the communications module; or when the priority of the first scenario is lower than that of the second scenario, automatically receive a second file that corresponds to a second interface and that is sent by the second device through a communication connection established by the communications module.

With reference to the second aspect, in a possible design manner, the device information obtained by the processor is a Bluetooth address of the second device. The communications module is configured to establish the communication connection based on the Bluetooth address obtained by the processor.

With reference to the second aspect, in a possible design manner, the display is further configured to display a third interface when the priority of the first scenario is the same as that of the second scenario, where the third interface is used to determine whether the first device transfers a file to the second device or the second device transfers a file to the first device.

The processor is further configured to: receive a first operation performed by a user in the third interface displayed by the display, where the first operation is used to indicate the first device to transfer a file to the second device; and in response to the first operation, automatically transfer the first file corresponding to the first interface to the second device through the communication connection established based on the Bluetooth address.

With reference to the second aspect, in another possible design manner, the processor is further configured to: receive a second operation performed by the user in the third interface displayed by the display, where the second operation is used to indicate the second device to transfer a file to the first device; automatically send a notification message to the second device in response to the second operation, where the notification message is used to indicate the second device to transfer a file to the first device; and receive the second file that corresponds to the second interface and that is sent by the second device through the communication connection established based on the Bluetooth address.

With reference to the second aspect, in another possible design manner, the memory stores scenario information and a priority of each of a plurality of scenarios. The scenario information includes at least any one of application identification information and user operation information, and the plurality of scenarios include the first scenario and the second scenario.

With reference to the second aspect, in a design manner (1), the scenario information of each of the plurality of preset scenarios may include the application identification information. That the processor is configured to determine that the first device is currently in a first scenario may specifically include: The processor is configured to obtain application identification information of the first application to which the first interface belongs; and when the application identification information of the first application matches application identification information in the first scenario, determine that the first device is currently in the first scenario.

For the plurality of preset scenarios in the design manner (1) and the scenario information in the scenarios, refer to related descriptions of the design manner (1) in the possible design manners of the first aspect. Details are not described again in this embodiment of this application.

With reference to the second aspect or any one of the foregoing possible design manners, in a design manner (2), the scenario information of each of the plurality of preset scenarios may include the user operation information.

That the processor is configured to determine that the first device is currently in a first scenario may specifically include: The processor is configured to: obtain user operation information corresponding to the first interface, where the user operation information corresponding to the first interface includes a moment at which the first device starts to display the first interface, or a moment at which the first device starts to display the first interface and a user operation received after the first device displays the first interface, or a user operation received by the first device within a third preset time period, where an end moment of the third preset time period is a current moment; and when the user operation information corresponding to the first interface matches user operation information in the first scenario, determine that the first device is currently in the first scenario.

In a case of the design manner (2), the user operation information corresponding to the first interface includes the user operation received by the first device within the third preset time period, where the end moment of the third preset time period is the current moment.

In this case, the plurality of preset scenarios include a scenario 1 and a scenario 2. A priority of the scenario 1 is higher than that of the scenario 2. User operation information in the scenario 1 includes: An electronic device receives a user operation within the third preset time period. User operation information in the scenario 2 includes: The electronic device does not receive a user operation within the third preset time period.

In another case of the design manner (2), the user operation information corresponding to the first interface includes the moment at which the first device starts to display the first interface, or the moment at which the first device starts to display the first interface and the user operation received after the first device displays the first interface. For the plurality of preset scenarios and the scenario information in the scenarios in this case of the design manner (2), refer to related descriptions of the design manner (2) in the possible design manners of the first aspect. Details are not described again in this embodiment of this application.

In this case, that the processor is configured to: when the user operation information corresponding to the first interface matches the user operation information in the first scenario, determine that the first device is currently in the first scenario may specifically include: The processor is configured to: if the user operation information corresponding to the first interface indicates that the first device receives, within the first preset time period, the third operation used to trigger the first device to display the first interface, determine that the first device is currently in the scenario 1, where the first scenario is the scenario 1; if the user operation information corresponding to the first interface indicates that the first device displays the first interface in response to the fifth operation, determine that the first device is currently in the scenario 4, where the first scenario is the scenario 4; if the user operation information corresponding to the first interface indicates that the first device receives, within the second preset time period, the third operation used to trigger the first device to display the first interface, and the first device receives the fourth operation after displaying the first interface, determine that the first device is currently in the scenario 2, where the first scenario is the scenario 2; and if the user operation information corresponding to the first interface indicates that the first device receives, within the second preset time period, the third operation used to trigger the first device to display the first interface, and the first device does not receive the fourth operation after displaying the first interface, determine that the first device is currently in the scenario 3, where the first scenario is the scenario 3.

With reference to the second aspect or the foregoing possible design manners, in a design manner (3), the scenario information includes the application identification information and the user operation information.

In the design manner (3), that the processor is configured to determine that the first device is currently in a first scenario includes: The processor is configured to: obtain application identification information of a first application; obtain user operation information corresponding to the first interface, where the user operation information corresponding to the first interface includes a moment at which the first device starts to display the first interface, or a moment at which the first device starts to display the first interface and a user operation received after the first device displays the first interface; and when the application identification information of the first application matches application identification information in the first scenario and the user operation information corresponding to the first interface matches user operation information in the first scenario, determine that the first device is currently in the first scenario.

For the plurality of preset scenarios in the design manner (3) and the scenario information in the scenarios, refer to related descriptions of the design manner (3) in the possible design manners of the first aspect. Details are not described again in this embodiment of this application.

In the design manner (3), that the processor is configured to: when the application identification information of the first application matches application identification information in the first scenario and the user operation information corresponding to the first interface matches user operation information in the first scenario, determine that the first device is currently in the first scenario includes: The processor is configured to: determine whether the application identification information of the first application matches the identification information of the identifiable application; and when the application identification information of the first application does not match the application identification information of the identifiable application, determine that the first device is currently in the scenario 4, where the first scenario is the scenario 4. The processor is configured to: when the application identification information of the first application matches the application identification information of any one of the at least one identifiable application, if the user operation information corresponding to the first interface indicates that the first device receives, within the first preset time period, the third operation used to trigger the first device to display the first interface, determine that the first device is currently in the scenario 1, where the first scenario is the scenario 1; if the user operation information corresponding to the first interface indicates that the first device displays the first interface in response to the fifth operation, determine that the first device is currently in the scenario 5, where the first scenario is the scenario 5; if the user operation information corresponding to the first interface indicates that the first device receives, within the second preset time period, the third operation used to trigger the first device to display the first interface, and the first device receives the fourth operation after displaying the first interface, determine that the first device is currently in the scenario 2, where the first scenario is the scenario 2; and if the user operation information corresponding to the first interface indicates that the first device receives, within the second preset time period, the third operation used to trigger the first device to display the first interface, and the first device does not receive the fourth operation after displaying the first interface, determine that the first device is currently in the scenario 3, where the first scenario is the scenario 3.

With reference to the second aspect or the foregoing possible design manners, in a design manner (4), the scenario information includes the user operation information. The plurality of preset scenarios may include a scenario 1 and a scenario 2. A priority of the scenario 1 is higher than that of the scenario 2.

In the design manner (4), that the processor is configured to determine that the first device is currently in a first scenario includes: The processor is configured to: obtain user operation information of the first application, where the user operation information corresponding to the first interface includes a user operation received after the first device displays the first interface; and when the user operation information corresponding to the first interface matches user operation information in the first scenario, determine that the first device is currently in the first scenario.

For the plurality of preset scenarios and the scenario information in the scenarios in the design manner (4), refer to related descriptions of the design manner (4) in the possible design manners of the first aspect. Details are not described again in this embodiment of this application.

With reference to the second aspect, in another possible design manner, the communications interface includes a Bluetooth module, and the communication connection established based on the Bluetooth address is a Bluetooth connection. The Bluetooth module is configured to establish the Bluetooth connection to the second device based on the Bluetooth address.

With reference to the second aspect, in another possible design manner, the communications interface includes a Bluetooth module and a wireless fidelity Wi-Fi module, and the communication connection established based on the Bluetooth address is a Wi-Fi connection. The Bluetooth module is configured to establish a Bluetooth connection to the second device based on the Bluetooth address. The processor is configured to exchange a Wi-Fi connection parameter with the second device through the Bluetooth connection established by the Bluetooth module. The Wi-Fi module is further configured to establish the Wi-Fi connection to the second device based on the Wi-Fi connection parameter. The processor is further configured to automatically send the first file to the second device through the Wi-Fi connection established by the Wi-Fi module, or receive the second file sent by the second device through the Wi-Fi connection established by the Wi-Fi module.

With reference to the second aspect, in another possible design manner, the second device is provided with the electronic tag, and the device information includes the Bluetooth address. That the processor is configured to obtain a Bluetooth address of the second device through the first NFC chip includes: The processor is configured to obtain the Bluetooth address of the second device from the electronic tag through the first NFC chip.

With reference to the second aspect, in another possible design manner, the second device is provided with the electronic tag, and the device information includes the tag ID. The processor is configured to obtain the tag ID from the electronic tag through the first NFC chip, and search for the Bluetooth address corresponding to the tag ID; and if the first device does not find the Bluetooth address corresponding to the tag ID, search for a surrounding Bluetooth device. The display is configured to display a fourth interface, where the second interface includes at least one Bluetooth option, and each Bluetooth option corresponds to one Bluetooth device found by the processor. The processor is further configured to receive a selection operation performed by the user on a first Bluetooth option in the at least one Bluetooth option displayed by the display, where the first Bluetooth option corresponds to the second device; and in response to the selection operation performed by the user on the first Bluetooth option, obtain the Bluetooth address of the second device corresponding to the first Bluetooth option.

With reference to the second aspect, in another possible design manner, the memory is further configured to: in response to the selection operation performed by the user on the first Bluetooth option, store a correspondence between the tag ID and the Bluetooth address of the second device. Alternatively, the processor is further configured to: in response to the selection operation performed by the user on the first Bluetooth option, transfer the Bluetooth address of the second device to the electronic tag through the first NFC chip.

According to a third aspect, an embodiment of this application provides a computer storage medium. The computer storage medium includes a computer instruction, and when the computer instruction is run on an electronic device, the electronic device is enabled to perform the file transfer method in the first aspect and the possible design manners of the first aspect.

According to a fourth aspect, an embodiment of this application provides a computer program product. When the computer program product is run on a computer, the computer is enabled to perform the file transfer method in the first aspect and the possible design manners of the first aspect.

It may be understood that, the electronic device in the second aspect and the possible design methods of the second aspect, the computer storage medium in the third aspect, and the computer program product in the fourth aspect provided above are all configured to perform the corresponding methods provided above. Therefore, for beneficial effects that the electronic device, the computer storage medium, and the computer program product can achieve, refer to beneficial effects in the corresponding methods provided above. Details are not described herein again.

### BRIEF DESCRIPTION OF DRAWINGS

FIG. 1 is a schematic diagram of a hardware structure of an electronic device according to an embodiment of this application;
FIG. 2 is a schematic diagram 1 of an instance of a communication scenario to which a file transfer method is applied according to an embodiment of this application;
FIG. 3A to FIG. 3C are a flowchart 1 of a file transfer method according to an embodiment of this application;
FIG. 4A and FIG. 4B are a schematic diagram 1 of an instance of a graphical user interface according to an embodiment of this application;
FIG. 5 is a schematic diagram 1 of a time sequence according to an embodiment of this application;
FIG. 6A and FIG. 6B are a detailed flowchart 1 of S308 in a flowchart of a file transfer method shown in FIG. 3A to FIG. 3C;
FIG. 7 is a schematic diagram 2 of a time sequence according to an embodiment of this application;
FIG. 8 is a schematic diagram 3 of a time sequence according to an embodiment of this application;
FIG. 9A is a schematic diagram 4 of a time sequence according to an embodiment of this application;
FIG. 9B is a schematic diagram 5 of a time sequence according to an embodiment of this application;

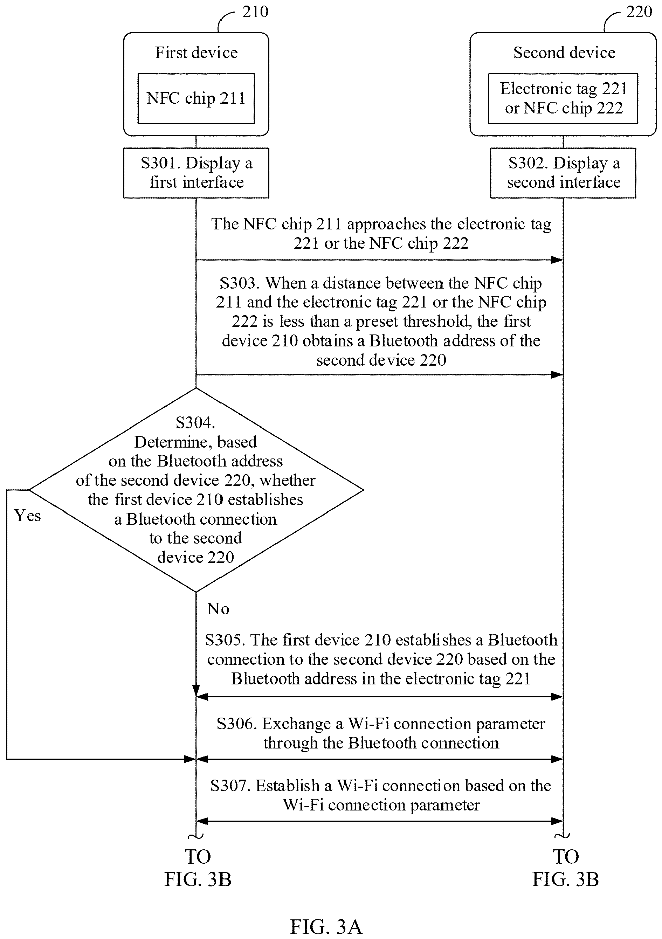

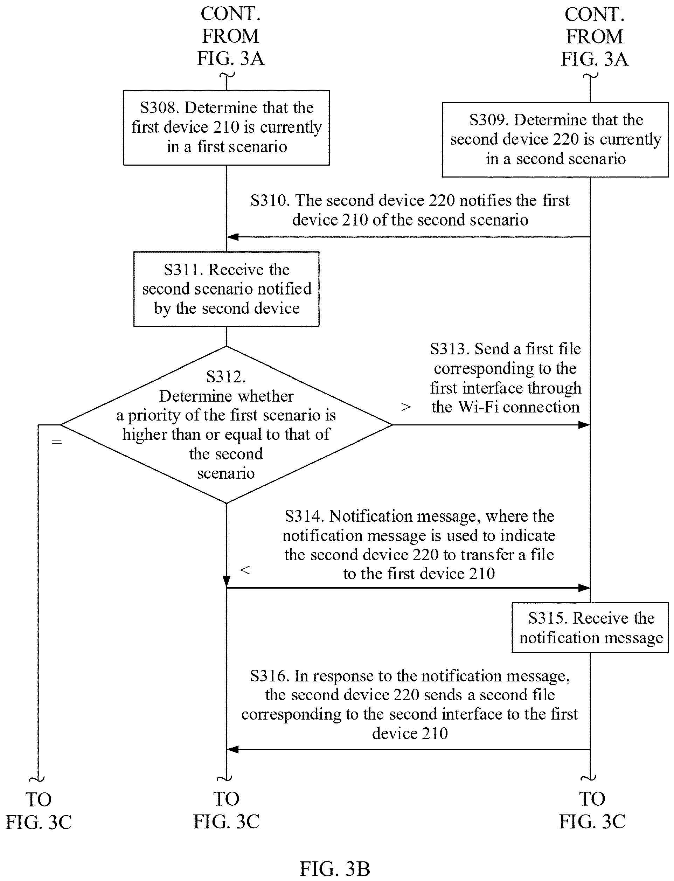

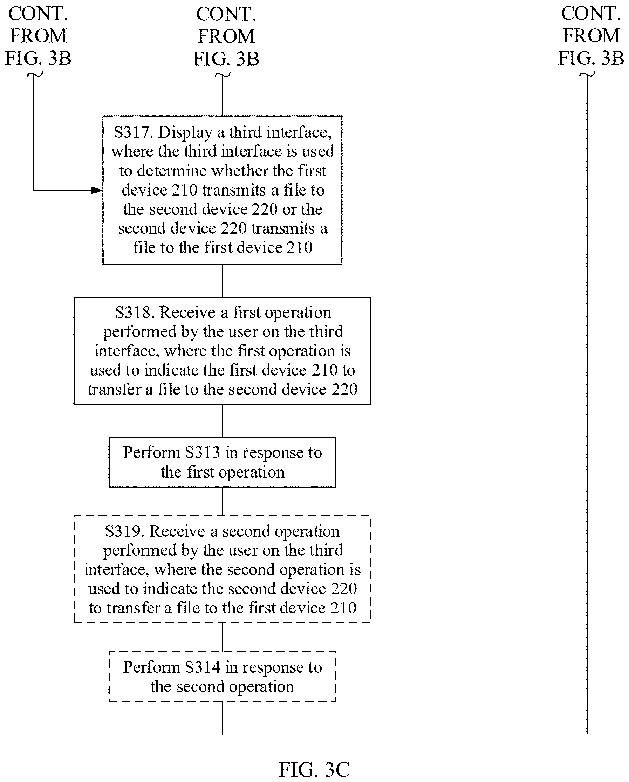

FIG. 9C-1 and FIG. 9C-2 are a detailed flowchart 2 of S308 in a flowchart of a file transfer method shown in FIG. 3A to FIG. 3C;
FIG. 9D-1 to FIG. 9D-3 are a schematic diagram 2 of an instance of a graphical user interface according to an embodiment of this application;

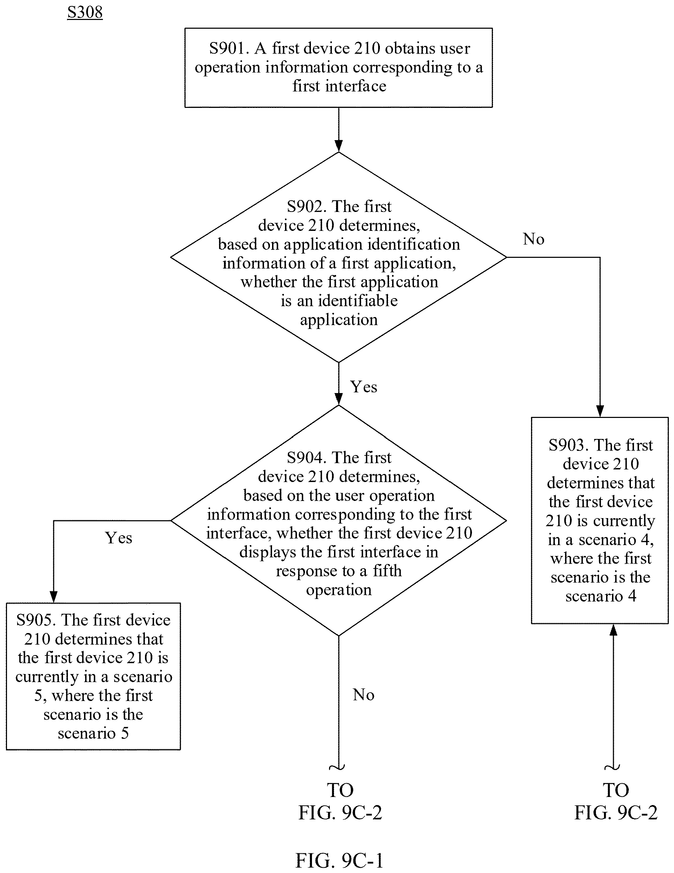

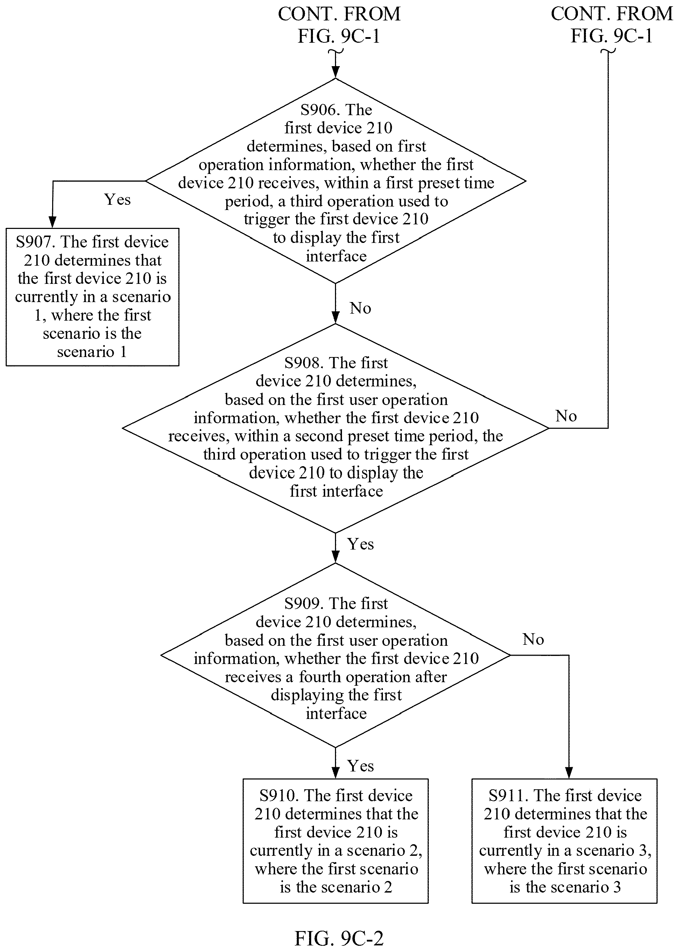

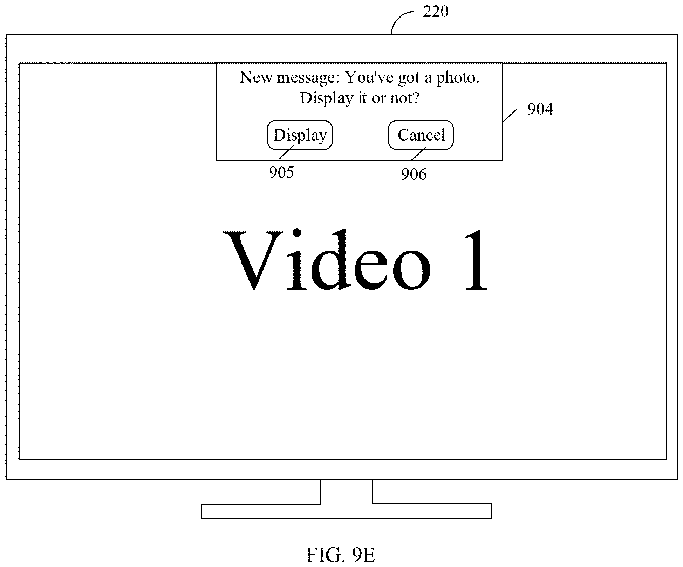

FIG. 9E is a schematic diagram 3 of an instance of a graphical user interface according to an embodiment of this application;
FIG. 10A-1 and FIG. 10A-2 are a schematic diagram 4 of an instance of a graphical user interface according to an embodiment of this application;

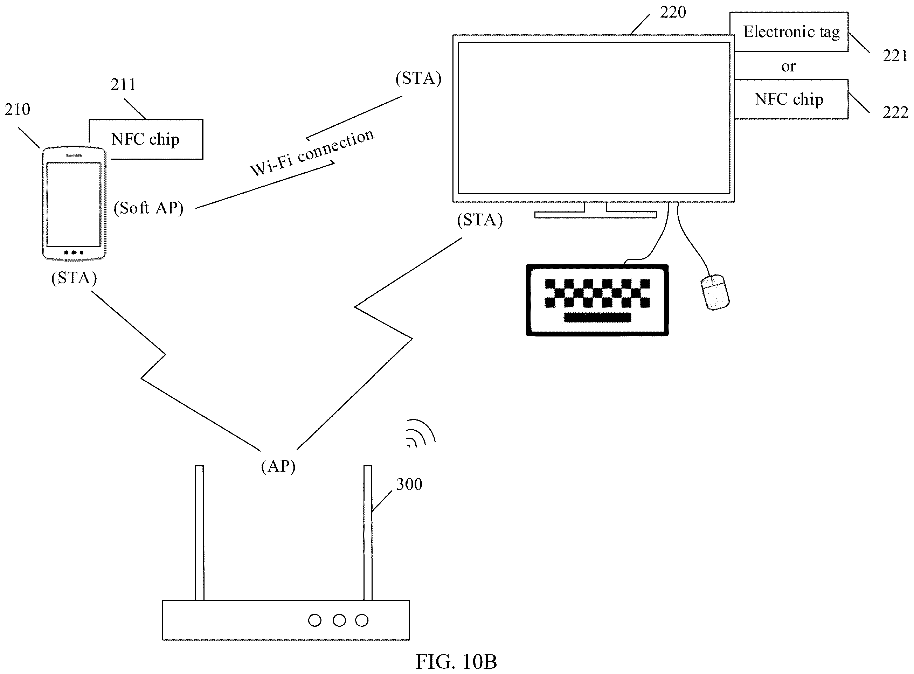

FIG. 10B is a schematic diagram 2 of an instance of a communication scenario to which a file transfer method is applied according to an embodiment of this application;
FIG. 10C-1 to FIG. 10C-4 is a flowchart 2 of a file transfer method according to an embodiment of this application;

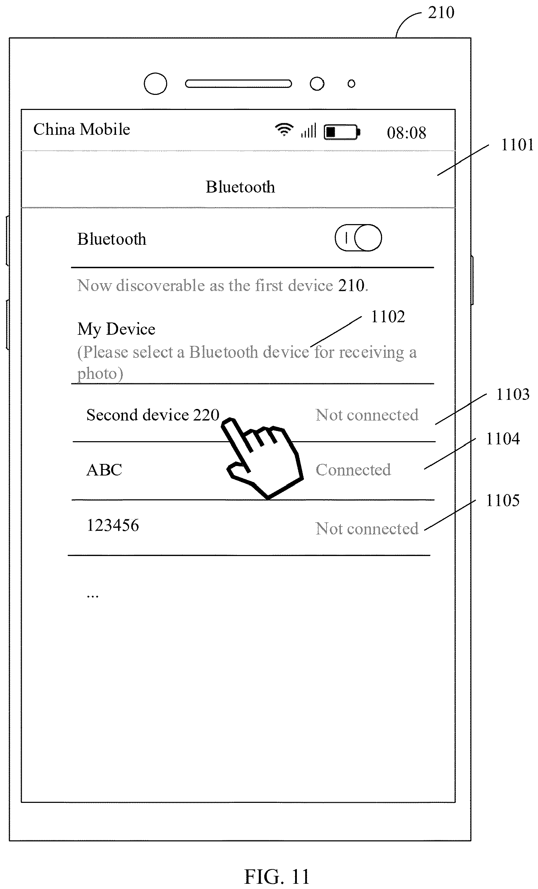

FIG. 11 is a schematic diagram 5 of an instance of a graphical user interface according to an embodiment of this application; and

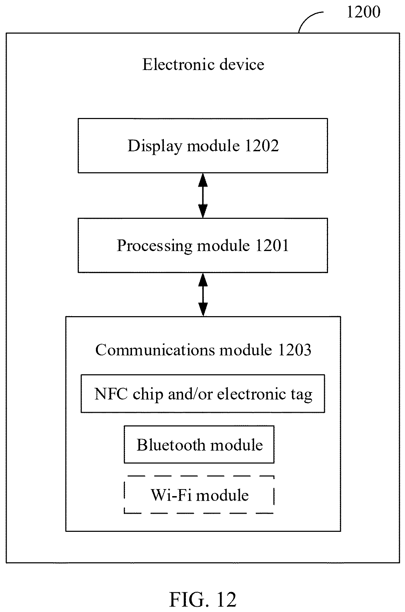

FIG. 12 is a schematic diagram of components of an electronic device according to an embodiment of this application.

### DESCRIPTION OF EMBODIMENTS

The embodiments of this application provide a file transfer method, and the method may be applied to a process of transferring a file between a first device (for example, a mobile phone) and a second device (for example, a PC). The first device is provided with a first NFC chip, and the second device is provided with a second NFC chip or an electronic tag. The electronic tag may include a Bluetooth address of the second device, or the electronic tag includes a tag ID used to obtain a Bluetooth address.

When the first NFC chip approaches the second NFC chip or the electronic tag, the first device may obtain the Bluetooth address of the second device. The first device or the second device may transfer a file through a communication connection (for example, a Bluetooth or Wi-Fi connection) established based on the Bluetooth address. In the embodiments of this application, that the first NFC chip approaches the second NFC chip or the electronic tag specifically means that a distance between the first NFC chip and the second NFC chip or the electronic tag is less than a preset threshold. For example, the preset threshold may be 10 centimeters (cm) or 20 cm.

Before the first device or the second device transfers a file, the first device and the second device may first determine a file transfer direction, for example, determine whether the first device transfers a file to the second device or the second device transfers a file to the first device.

In the embodiments of this application, the first device may determine a scenario (for example, a first scenario) in which the first device is currently located, and then receive a scenario (for example, a second scenario) in which the second device is located and that is notified by the second device. The first device may store priorities of a plurality of preset scenarios, and the plurality of preset scenarios include the first scenario and the second scenario. Then, the first device may compare priorities of the first scenario and the second scenario, and determine the file transfer direction based on the priorities of the first scenario and the second scenario. For example, when the priority of the first scenario is higher than that of the second scenario, the first device transfers a file to the second device. When the priority of the second scenario is higher than that of the first scenario, the second device transfers a file to the first device.

The first scenario is determined based on application identification information of a first application to which a first interface currently displayed by the first device belongs. The second scenario is determined based on application identification information of a second application to which a second interface currently displayed by the second device belongs. An application to which a currently displayed interface belongs is an application to which content in the currently displayed interface belongs. To be specific, the first application to which the first interface belongs means that content of the first application is currently displayed in the first interface. The second application to which the second interface belongs means that content of the second application is currently displayed in the second interface.

Alternatively, the first scenario is determined based on a moment at which the first device starts to display a first interface and whether a user operation is received after the first device displays the first interface. The second scenario is determined based on a moment at which the second device starts to display a second interface and whether a user operation is received after the second device displays the second interface.

Alternatively, the first scenario is determined based on application identification information of a first application to which a first interface currently displayed by the first device belongs, a moment at which the first device starts to display the first interface, and whether a user operation is received after the first device displays the first interface. The second scenario is determined based on application identification information of a second application to which a second interface currently displayed by the second device belongs, a moment at which the second device starts to display the second interface, and whether a user operation is received after the second device displays the second interface.

A possibility that an electronic device (for example, the first device) transfers a file to another electronic device may vary with a graphical user interface of an application that is displayed by the electronic device. For example, when the electronic device displays a picture in a "Photos" application, there is a relatively high possibility that an NFC chip of the electronic device approaches an electronic tag or an NFC chip of the another electronic device to transfer a file (for example, the picture) corresponding to the graphical user interface to the another electronic device. However, when the electronic device displays a graphical user interface of a "bank" application (for example, China Merchants Bank), there is a relatively low possibility that the NFC chip of the electronic device approaches the electronic tag or the NFC chip of the another electronic device to transfer a file (for example, a screenshot) corresponding to the graphical user interface to the another electronic device.

In the embodiments of this application, a plurality of applications may be classified into an identifiable application and a non-identifiable application based on possibilities, obtained through statistics collection, that the electronic device transfers graphical user interfaces of the applications to another electronic device in the graphical user interfaces. However, when the electronic device displays a graphical user interface of the identifiable application, there is a relatively high possibility that the NFC chip of the electronic device approaches an electronic tag or an NFC chip of another electronic device to transfer a file corresponding to the graphical user interface to the another electronic device.

For example, the identifiable application in the embodiments of this application may be a "Photos" application, a "Browser" application, various office applications (for example, a "Word" application), a "Video" application (for example, an "iQIYI" application or a "Youku" application), or an "Email" application. The identifiable application in the electronic device may alternatively be set by a user. For example, the electronic device may receive settings of applications in the electronic device in a "Settings" application from the user, to set one or more applications as identifiable applications.

It should be noted that there are different types of electronic devices. A form of an application (the identifiable application or the non-identifiable application) described in the embodiments of this application may vary with a type of the electronic device. For example, when the electronic device is a terminal (for example, a mobile phone or a tablet computer) that runs an intelligent operating system such as Android, iOS, or Windows Phone, the application may be an application installed on the terminal, for example, the "Photos" application, the "Browser" application, the various office applications, the "Video" application, or the "Email" application. When the electronic device is a personal computer (PC)-type terminal, the application may be content in an interface currently displayed by the terminal. For example, when the user views a picture or a photo by using a PC, it may be considered that the PC currently runs an identifiable application. Alternatively, when the user views content by using a browser on the PC, or when the user opens various office applications, or when the user watches various videos, or when the user views, edits, or sends an email, it may be considered that the PC currently runs an identifiable application. Alternatively, when the user opens, by using the PC, a folder including one or more pictures, photos, videos, and files (for example, office applications), it may alternatively be considered that the PC currently runs an identifiable application.

In addition, moments at which electronic devices start to display a current interface (that is, a graphical user interface) may also reflect a possibility that an electronic device transfers a file to another electronic device. For example, it is assumed that an electronic device 1 and an electronic device 2 currently display a graphical user interface of a same application. If a moment at which the electronic device 1 starts to display the graphical user interface is later than a moment at which the electronic device 2 starts to display the graphical user interface, when an NFC chip of the electronic device 1 approaches an electronic tag or an NFC chip of the electronic device 2, there is a relatively high possibility that the electronic device 1 transfers a file to the electronic device 2.

Moreover, whether the electronic device receives a user operation after displaying the current interface may also reflect the possibility that the electronic device transfers a file to another electronic device. For example, it is assumed that the electronic device 1 and the electronic device 2 currently display a graphical user interface of a same application, and the electronic device 1 and the electronic device 2 display the graphical user interface at a same moment. If the electronic device 1 receives a user operation after displaying the graphical user interface, but the electronic device 2 does not receive a user operation after displaying the graphical user interface, when the NFC chip of the electronic device 1 approaches the electronic tag or the NFC chip of the electronic device 2, there is a relatively high possibility that the electronic device 1 transfers a file to the electronic device 2.

In conclusion, the application to which the current interface displayed by the electronic device belongs, and/or the moment at which the electronic device starts to display the current interface and whether the electronic device receives a user operation after displaying the current interface may reflect the possibility that the electronic device transfers a file to another electronic device. The possibility that the electronic device transfers a file to another electronic device may be represented by a priority, of a scenario in which the electronic device is currently located, that is determined based on the application to which the current interface displayed by the electronic device belongs, and/or the moment at which the electronic device starts to display the current interface and whether the electronic device receives a user operation after displaying the current interface. Therefore, the file transfer direction is determined based on priorities of scenarios in which the two electronic devices are located, to improve accuracy of the file transfer direction, avoid file mis-transfer, and improve file transfer accuracy.

The electronic tag (tag) in the embodiments of this application may be a radio frequency identification (radio frequency identification, RFID) tag. The electronic tag may be pasted on the second device.

The electronic tag (for example, an electronic tag 221) may include device information of the second device. When a first device 210 approaches a second device 220, the first device may read information in the electronic tag 221, that is, may read the device information of the second device.

In a case, the electronic tag of the second device is pasted on the second device before the second device is delivered from a factory. The device information includes the tag ID of the electronic tag and the Bluetooth address of the second device. To be specific, the electronic tag stores the tag ID of the electronic tag and the Bluetooth address of the second device. The tag ID of the electronic tag can uniquely identify the electronic tag.

In another case, the electronic tag is added to the second device after the second device is delivered from a factory. For example, the electronic tag may be pasted on the second device by a user or a vendor. The device information includes the tag ID of the electronic tag. To be specific, the electronic tag stores the tag ID of the electronic tag. Because the electronic tag is added to the second device after delivery, the electronic tag does not include the device information (for example, the Bluetooth address of the second device) of the second device. The tag ID of the electronic tag can uniquely identify the electronic tag, but cannot identify the second device. In a use process, the user may configure a correspondence between the tag ID of the electronic tag and the Bluetooth address of the second device, so that the tag ID can be used to identify the second device.

For ease of understanding by a person skilled in the art, an operating principle of the electronic tag is described herein in the embodiments of this application.

Generally, electronic tags can be classified into a passive tag, a semi-active tag, and an active tag.
(1) Passive tag: There is no internal power supply in the passive tag. When approaching an NFC chip of another electronic device, the passive tag may receive an electromagnetic wave sent by the NFC chip. An internal integrated circuit (integrated circuit, IC) of the passive tag is driven by a received electromagnetic wave signal. When receiving an electromagnetic wave signal of sufficient strength, the passive tag may send data stored in the passive tag to the NFC chip, for example, a tag ID, or a tag ID and a Bluetooth address.
(2) Semi-active tag: A working mode of the semi-active tag is similar to that of the passive tag. A difference lies in that the semi-active tag includes a small battery. The small battery has enough power to drive an internal IC of the semi-active tag, so that the IC works. Because the semi-active tag includes the foregoing small battery, the semi-active tag responds faster than the passive tag.
(3) Active tag: The active tag includes an internal power supply, which is used to supply power to an internal IC to generate an external signal. Generally, the active tag allows NFC communication at a relatively long distance, and the active tag has a relatively large storage space, which may be used to store data transferred by an NFC chip of another electronic device.

The electronic tag in the embodiments of this application may be any one of the passive tag, the semi-active tag, or the active tag. In an actual application, in consideration of advantages of the passive tag such as low price, small size, and no need of power supply, the electronic tag is usually the passive tag.

For example, the first device in the embodiments of this application may be a portable computer (for example, a mobile phone), a notebook computer, a wearable electronic device (for example, a smart watch), a tablet computer, an augmented reality (augmented reality, AR) device/a virtual reality (virtual reality, VR) device, or a vehicle-mounted device. A specific form of the first device is not particularly limited in the following embodiments. The second device in the embodiments of this application may alternatively be a portable computer (for example, a mobile phone), a notebook computer, a wearable electronic device (for example, a smart watch), a tablet computer, an augmented reality (augmented reality, AR) device/a virtual reality (virtual reality, VR) device, a vehicle-mounted device, or the like. A specific form of the second device is not particularly limited in the following embodiments. In a specific implementation, the first device and the second device may be electronic devices of a same type, or may be electronic devices of different types.

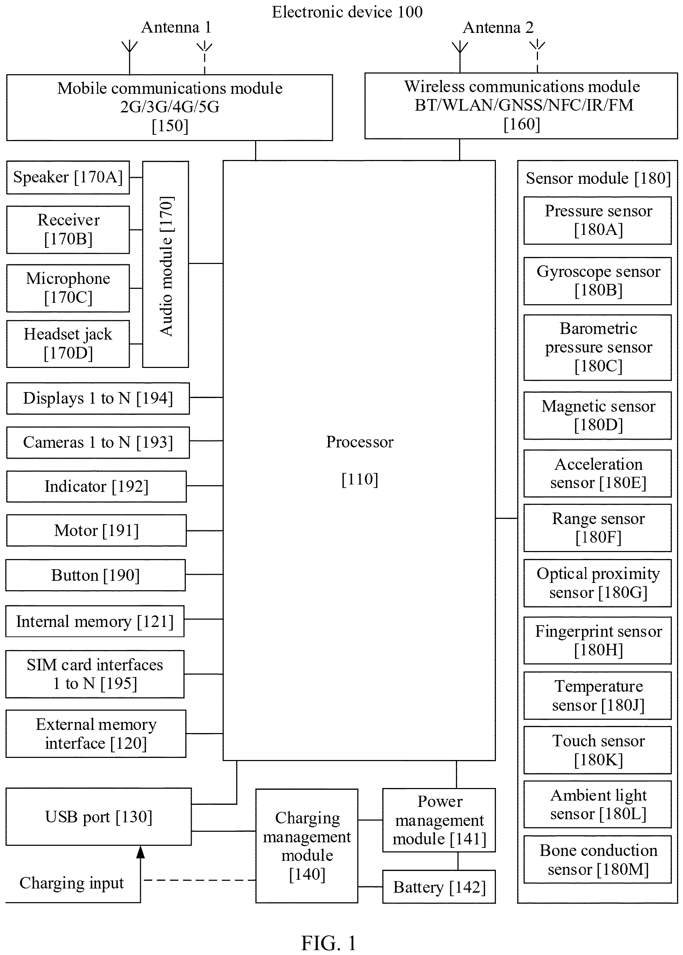

FIG. 1 is a schematic structural diagram of an electronic device 100 according to an embodiment of this application. The electronic device 100 may be a first device (for example, a first device 210) or a second device (for example, a second device 220).

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

The sensor module 180 may include a pressure sensor 180A, a gyroscope sensor 180B, a barometric pressure sensor 180C, a magnetic sensor 180D, an acceleration sensor 180E, a range sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that a structure shown in the embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural processing unit (neural-network processing unit, NPU). Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store an instruction and data. In some embodiments, the memory in the processor 110 is a cache memory. The memory may store an instruction or data that is just used or cyclically used by the processor 110. If the processor 110 needs to use the instruction or the data again, the processor 110 may directly invoke the instruction or the data from the memory, to avoid repeated access and reduce a waiting time of the processor 110, thereby improving system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes one serial data line (serial data line, SDL) and one serial clock line (derail clock line, SCL). In some embodiments, the processor 110 may include a plurality of groups of I2C buses. The processor 110 may be separately coupled to the touch sensor 180K, a charger, a flash light, the camera 193, and the like through different 12C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transfer an audio signal to the wireless communications module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communications module 160 through a PCM bus interface. In some embodiments, the audio module 170 may alternatively transfer an audio signal to the wireless communications module 160 through the PCM interface, to implement a function of answering a call through a Bluetooth headset. Both the 12S interface and the PCM interface may be configured to perform audio communication.

The UART interface is a universal serial data bus, and is configured to perform asynchronous communication. The bus may be a two-way communications bus, and converts to-be-transmitted data between serial communication and parallel communication. In some embodiments, the UART interface is usually configured to connect to the processor 110 and the wireless communications module 160. For example, the processor 110 communicates with a Bluetooth module in the wireless communications module 160 through the UART interface, to implement a Bluetooth function. In some embodiments, the audio module 170 may transfer an audio signal to the wireless communications module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured through software. The GPIO interface may be configured as a control signal, or may be configured as a data signal. In some embodiments, the GPIO interface may be configured to connect to the processor 110, the camera 193, the display 194, the wireless communications module 160, the audio module 170, the sensor module 180, and the like. The GPIO interface may alternatively be configured as the I2C interface, the 12S interface, the UART interface, the MIPI interface, or the like.

The USB port 130 is a port that conforms to a USB standard specification, and may be specifically a mini USB port, a micro USB port, a USB Type C port, or the like. The USB port 130 may be configured to connect to the charger to charge the electronic device 100, or may be configured to transfer data between the electronic device 100 and a peripheral device, or may be configured to connect to a headset to play audio through the headset, or may be configured to connect to another electronic device such as an AR device.

It can be understood that an interface connection relationship between the modules shown in the embodiments is merely an example for description, and does not constitute a limitation on the structure of the electronic device 100. In some other embodiments of this application, the electronic device 100 may alternatively use an interface connection manner different from that in the foregoing embodiment, or a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 may further supply power to the electronic device through the power management module 141 while charging the battery 142.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communications module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communications module 150, the wireless communications module 160, the modem processor, the baseband processor, and the like.

The antenna 1 and the antenna 2 are configured to transmit and receive an electromagnetic wave signal. Each antenna in the electronic device 100 may be configured to cover one or more communications bands. Different antennas may be further multiplexed, to improve antenna utilization. For example, the antenna 1 may be multiplexed as a diversity antenna of a wireless local area network. In some other embodiments, an antenna may be used in combination with a tuning switch.

The mobile communications module 150 can provide a solution, applied to the electronic device 100, to wireless communication including 2G/3G/4G/5G, and the like. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit the electromagnetic wave to the modem processor for demodulation. The mobile communications module 150 may further amplify a signal modulated by the modem processor, and convert an amplified signal into an electromagnetic wave through the antenna 1 for radiation. In some embodiments, at least some function modules in the mobile communications module 150 may be disposed in the processor 110. In some embodiments, at least some function modules in the mobile communications module 150 may be disposed in a same device as at least some modules in the processor 110.

The modem processor may include a modulator and a demodulator. The modulator is configured to modulate a to-be-sent low-frequency baseband signal into a medium or high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (not limited to the speaker 170A, the receiver 170B, or the like), or displays an image or a video by using the display 194. In some embodiments, the modem processor may be an independent device. In some other embodiments, the modem processor may be independent of the processor 110, and is disposed in a same device as the mobile communications module 150 or another function module.

The wireless communications module 160 may provide a solution, applied to the electronic device 100, to wireless communication including a wireless local area network (wireless local area networks, WLAN) (for example, a Wi-Fi network), Bluetooth (Bluetooth, BT), a global navigation satellite system (global navigation satellite system, GNSS), frequency modulation (frequency modulation, FM), NFC, infrared (infrared, IR) technology, and the like. The wireless communications module 160 may be one or more devices integrating at least one communications processor module. The wireless communications module 160 receives an electromagnetic wave through the antenna 2, performs frequency modulation and filtering processing on the electromagnetic wave signal, and sends a processed signal to the processor 110. The wireless communications module 160 may further receive a to-be-sent signal from the processor 110, perform frequency modulation and amplification on the signal, and convert a processed signal into an electromagnetic wave through the antenna 2 for radiation. When the electronic device 100 is the first device, the wireless communications module 160 may provide an NFC wireless communication solution applied to the electronic device 100, which means that the first device includes an NFC chip. The NFC chip can improve an NFC wireless communication function. When the electronic device 100 is the second device, the wireless communications module 160 may provide an NFC wireless communication solution applied to the electronic device 100, which means that the first device includes an electronic tag (for example, an RFID tag). When approaching the electronic tag, an NFC chip of another device may perform NFC wireless communication with the second device.

In some embodiments, in the electronic device 100, the antenna 1 is coupled to the mobile communications module 150, and the antenna 2 is coupled to the wireless communications module 160, so that the electronic device 100 can communicate with a network and another electronic device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 implements the display function through the GPU, the display 194, the application processor, and the like. The GPU is a microprocessor for image processing, and is connected to the display 194 and the application processor. The GPU is configured to: perform mathematical and geometric calculation, and perform graphics rendering. The processor 110 may include one or more GPUs, which execute a program instruction to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diodes, QLED), or the like. In some embodiments, the electronic device 100 may include one or N displays 194, where N is a positive integer greater than 1.

The electronic device 100 may implement the photographing function through the ISP, the camera 193, the video codec, the GPU, the display 194, the application processor, and the like.

The ISP is configured to process data fed back by the camera 193. For example, during photographing, a shutter is pressed, light is transmitted to a photosensitive element of the camera through a lens. The photosensitive element of the camera converts an optical signal into an electrical signal, and transmits the electrical signal to the ISP for processing. The ISP converts the electrical signal into an image that is visible to the eye. The ISP may further perform algorithm optimization on noise, luminance, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge coupled device, CCD) or a complementary metal-oxide-semiconductor (complementary metal-oxide-semiconductor, CMOS) phototransistor transistor. The photosensitive element converts an optical signal into an electrical signal, and then transmits the electrical signal to the ISP. The ISP converts the electrical signal into a digital image signal, and outputs the digital image signal to the DSP for processing. The DSP converts the digital image signal into a standard image signal in a format such as RGB or YUV. In some embodiments, the electronic device 100 may include one or N cameras 193, where N is a positive integer greater than 1.

The digital signal processor is configured to process a digital signal. In addition to the digital image signal, the digital signal processor may further process another digital signal. For example, when the electronic device 100 selects a frequency, the digital signal processor is configured to perform Fourier transform on frequency energy.

The video codec is configured to compress or decompress a digital video. The electronic device 100 may support one or more codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a biological neural network structure, for example, by referring to a mode of transfer between human brain neurons, and may further continuously perform self-learning. Intelligent cognition of the electronic device 100 such as image recognition, facial recognition, speech recognition, and text understanding can be implemented by using the NPU.

The external memory interface 120 may be configured to connect to an external memory card such as a micro SD card, to extend a storage capability of the electronic device 100. The external memory card communicates with the processor 110 through the external memory interface 120, to implement a data storage function. For example, a file such as music or a video is stored in the external memory card.

The internal memory 121 may be configured to store computer-executable program code. The executable program code includes an instruction. The processor 110 runs the instruction stored in the internal memory 121, to implement various function applications and data processing of the electronic device 100. The internal memory 121 may include a program storage area and a data storage area. The program storage area may store an operating system, an application required by at least one function (for example, a sound playing function and an image playing function), and the like. The data storage area may store data (such as audio data and a phone book) created when the electronic device 100 is used, and the like. In addition, the internal memory 121 may include a high-speed random access memory, or may include a nonvolatile memory, for example, at least one magnetic disk storage device, a flash storage device, or a universal flash storage (universal flash storage, UFS).

The electronic device 100 may implement an audio function such as music playing or recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to perform audio signal encoding and decoding. In some embodiments, the audio module 170 may be disposed in the processor 110, or some function modules in the audio module 170 are disposed in the processor 110.

The speaker 170A, also referred to as a "horn", is configured to convert an audio electrical signal into a sound signal. The electronic device 100 may listen to music or answer a hands-free call through the speaker 170A.

The receiver 170B, also referred to as an "earpiece", is configured to convert an audio electrical signal into a sound signal. When the electronic device 100 answers a call or receives a voice message, the receiver 170B may be put close to a human ear to listen to a voice.

The microphone 170C, also referred to as a "mike" or a "microphone", is configured to convert a sound signal into an electrical signal. When making a call or sending a voice message, a user may make a sound near the microphone 170C through the mouth of the user, to enter a sound signal to the microphone 170C. At least one microphone 170C may be disposed in the electronic device 100. In some other embodiments, two microphones 170C may be disposed in the electronic device 100, to collect a sound signal and further implement a noise reduction function. In some other embodiments, three, four, or more microphones 170C may alternatively be disposed in the electronic device 100, to collect a sound signal, reduce noise, identify a sound source, implement a directional recording function, and the like.

The headset jack 170D is configured to connect to a wired headset. The headset jack 170D may be the USB interface 130, or may be a 3.5 mm open mobile electronic device platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed in the display 194. There are many types of pressure sensors 180A, for example, a resistive pressure sensor, an inductive pressure sensor, and a capacitive pressure sensor. The capacitive pressure sensor may include at least two parallel plates made of conductive materials. A capacitance between electrodes changes when force is applied to the pressure sensor 180A. The electronic device 100 determines a pressure strength based on a capacitance change. When a touch operation is performed on the display 194, the electronic device 100 detects a strength of the touch operation based on the pressure sensor 180A. The electronic device 100 may also calculate a touch position based on a detection signal of the pressure sensor 180A. In some embodiments, touch operations that are performed on a same touch position but have different touch operation strengths may correspond to different operation instructions. For example, when a touch operation whose touch operation strength is less than a first pressure threshold is performed on an icon of Messages, an instruction for viewing an SMS message is executed; or when a touch operation whose touch operation strength is greater than or equal to a first pressure threshold is performed on an icon of Messages, an instruction for creating a new SMS message is executed.

The gyroscope sensor 180B may be configured to determine a motion posture of the electronic device 100. In some embodiments, an angular velocity of the electronic device 100 around three axes (that is, axes x, y, and z) may be determined through the gyroscope sensor 180B. The gyroscope sensor 180B may be used for image stabilization during photographing. For example, when the shutter is pressed, the gyroscope sensor 180B detects an angle at which the electronic device 100 jitters, calculates, based on the angle, a distance for which a lens module needs to compensate, and allows the lens to eliminate the jitter of the electronic device 100 through a reverse motion, to implement image stabilization. The gyroscope sensor 180B may be further used in a navigation scenario and a somatic game scenario.

The barometric pressure sensor 180C is configured to measure barometric pressure. In some embodiments, the electronic device 100 calculates an altitude by using the barometric pressure value obtained by the barometric pressure sensor 180C through measurement, to assist in positioning and navigation.

The magnetic sensor 180D includes a Hall sensor. The electronic device 100 may detect opening and closing of a flip cover through the magnetic sensor 180D. In some embodiments, when the electronic device 100 is a clamshell phone, the electronic device 100 may detect opening and closing of a flip cover based on the magnetic sensor 180D, to set a feature such as automatic unlocking through flipping based on a detected opening or closing state of the flip cover.

The acceleration sensor 180E may detect magnitude of accelerations in various directions (usually on three axes) of the electronic device 100, and may detect magnitude and a direction of the gravity when the electronic device 100 is still. The acceleration sensor 180E may be further configured to identify a posture of the electronic device, and is applied to applications such as a pedometer and switching between a landscape mode and a portrait mode.

The range sensor 180F is configured to measure a distance. The electronic device 100 may measure the distance in an infrared or a laser manner. In some embodiments, in a photographing scenario, the electronic device 100 may measure a distance through the range sensor 180F to implement quick focusing.

The optical proximity sensor 180G may include, for example, a light-emitting diode (LED) and an optical detector such as a photodiode. The light-emitting diode may be an infrared light-emitting diode. The electronic device 100 emits infrared light through the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, through the optical proximity sensor 180G, that the user holds the electronic device 100 close to the ear for a call, to automatically perform screen-off for power saving. The optical proximity sensor 180G may also be used in a smart cover mode or a pocket mode to automatically perform screen unlocking or locking.

The ambient light sensor 180L is configured to sense ambient light luminance. The electronic device 100 may adaptively adjust luminance of the display 194 based on the sensed ambient light luminance. The ambient light sensor 180L may be further configured to automatically adjust a white balance during photographing. The ambient light sensor 180L may further cooperate with the optical proximity sensor 180G to detect whether the electronic device 100 is in a pocket, to prevent an accidental touch.

The fingerprint sensor 180H is configured to collect a fingerprint. The electronic device 100 may implement fingerprint-based unlocking, application lock access, fingerprint-based photographing, fingerprint-based call answering, and the like by using a feature of the collected fingerprint.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 lowers performance of a processor located near the temperature sensor 180J, to reduce power consumption for thermal protection. In some other embodiments, when the temperature is less than another threshold, the electronic device 100 heats the battery 142, to prevent the electronic device 100 from being abnormally powered off because of a low temperature. In some other embodiments, when the temperature is less than still another threshold, the electronic device 100 boosts an output voltage of the battery 142 to avoid abnormal power-off caused by a low temperature.

The touch sensor 180K is also referred to as a "touch panel". The touch sensor 180K may be disposed on the display 194, and the touch sensor 180K and the display 194 form a touchscreen. The touch sensor 180K is configured to detect a touch operation performed on or near the touch sensor 180K. The touch sensor may transfer the detected touch operation to the application processor, to determine a type of a touch event, and to provide a visual output related to the touch operation through the display 194. In some other embodiments, the touch sensor 180K may alternatively be disposed on a surface of the electronic device 100 at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also contact a body pulse to receive a blood pressure beating signal. In some embodiments, the bone conduction sensor 180M may alternatively be disposed in a headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be used for an incoming call vibration prompt, or may be used for a touch vibration feedback. For example, touch operations performed on different applications (for example, photographing and audio playback) may also correspond to different vibration feedback effects. Touch operations performed on different areas on the display 194 may correspond to different vibration feedback effects of the motor 191. Different application scenarios (for example, a time reminder scenario, an information receiving scenario, an alarm clock scenario, and a game scenario) may also correspond to different vibration feedback effects. A touch vibration feedback effect may alternatively be customized.

The indicator 192 may be an indicator light, which may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into one SIM card interface 195. The plurality of cards may be of a same type or different types. The SIM card interface 195 may also be compatible with different types of SIM cards. The SIM card interface 195 may also be compatible with an external memory card. The electronic device 100 interacts with a network by using the SIM card, to implement functions such as calling and data communication. In some embodiments, the electronic device 100 uses an eSIM, that is, an embedded SIM card. The eSIM card may be embedded in the electronic device 100, and cannot be separated from the electronic device 100.

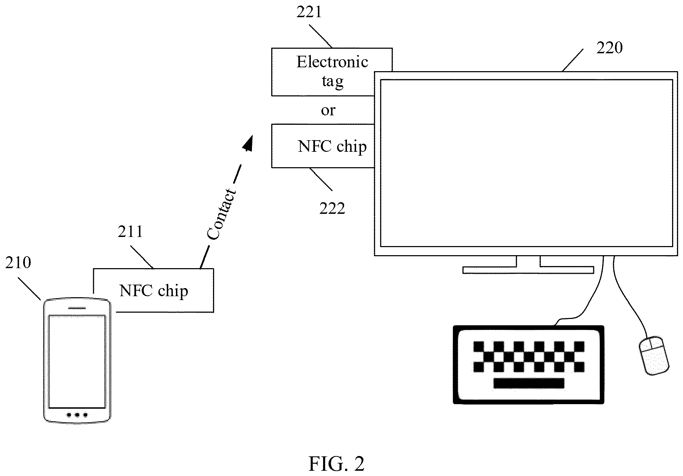

FIG. 2 is a schematic diagram of an instance of a communication scenario to which a file transfer method is applied according to an embodiment of this application. The method in the embodiments of this application may be applied to a process in which a user uses a first device 210 (for example, a mobile phone) to approach a second device 220 (for example, a PC), and the first device 210 or the second device 220 transfers a file. The first device 210 is provided with an NFC chip 211 (that is, a first NFC chip), and the second device 220 is provided with an electronic tag 221 or an NFC chip 222 (that is, a second NFC chip). The electronic tag 221 may include device information of the second device. When the first device 210 approaches the second device 220, the first device may read information in the electronic tag 221, that is, may read the device information of the second device. The first device may establish a communication connection to the second device based on the device information of the second device. Then, the first device or the second device may automatically transfer a file through the communication connection after a file transfer direction is determined.

It should be noted that, before the first device approaches the second device (that is, before a distance between the first NFC chip and the electronic tag or the second NFC chip is less than a preset threshold), the first device may have established a communication connection to the second device. In this case, after obtaining the device information of the second device, the first device does not need to establish a communication connection to the second device, and instead, the first device or the second device may directly transfer a file after the file transfer direction is determined.

Before the first device approaches the second device, if the first device does not establish a communication connection to the second device, after obtaining the device information of the second device, the first device may establish a communication connection to the second device. After the first device establishes the communication connection to the second device and the file transfer direction is determined, the first device or the second device may transfer a file.

The communication connection is not limited in the embodiments. For example, the communication connection may include a Bluetooth connection, or may include a Wi-Fi connection, or may include a Bluetooth connection and a Wi-Fi connection. The following describes a method procedure of this application by using specific embodiments. The Bluetooth connection and the Wi-Fi connection may be replaced with other types of communication connections.

An embodiment of this application provides a data transfer method. As shown in FIG. 3A to FIG. 3C, the data transfer method may include S301 to S319.

S301. A first device 210 displays a first interface.

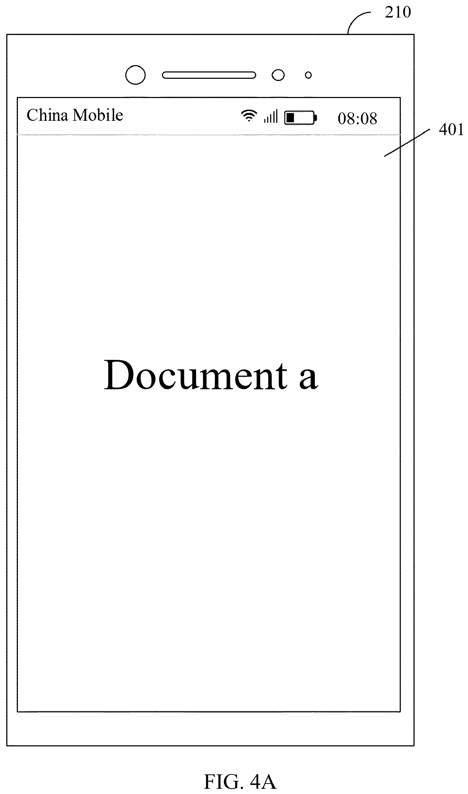

The first interface may be a graphical user interface of a first application. For example, the first interface may be any one of a graphical user interface of a "WeChat" application, a graphical user interface of a "Messages" application, a graphical user interface of a "Photos" application, a graphical user interface of a "Browser" application, or a graphical user interface of a "Word" application. For example, the first device 210 may display a first interface 401 shown in FIG. 4A.

S302. A second device 220 displays a second interface.

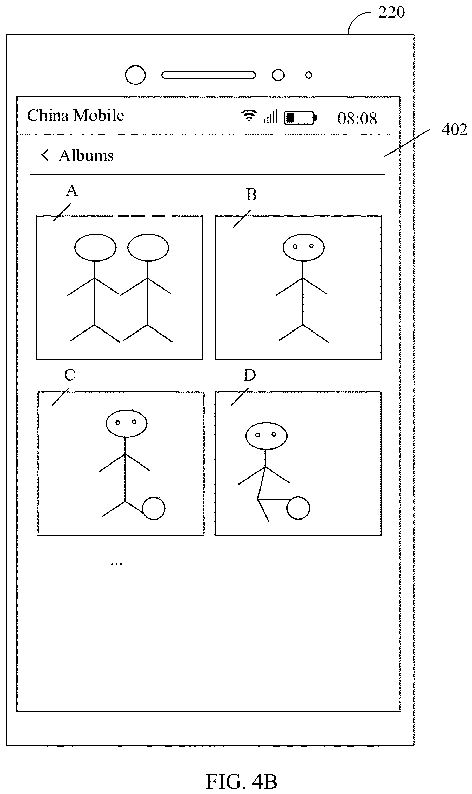

The second interface may be a graphical user interface of a second application. The first application may be the same as or different from the second application. The first interface may be the same as or different from the second interface. For example, the second device 220 may display a second interface 402 shown in FIG. 4B.

S303. When a distance between an NFC chip 211 and an electronic tag 221 or an NFC chip 222 is less than a preset threshold, the first device 210 obtains a Bluetooth address of the second device 220.

In some embodiments, the second device 220 is provided with the NFC chip 222. The NFC chip 211 may interact with the NFC chip 222, and the NFC chip 222 transfers the Bluetooth address of the second device 220 to the NFC chip 211. For a method in which the NFC chip 211 approaches the NFC chip 222, to exchange and transfer data with and to the NFC chip 222, refer to a data transfer method through NFC contact in a conventional technology. Details are not described in this embodiment of this application.

In some other embodiments, the second device 220 is provided with the electronic chip 221. The electronic tag 221 is pasted on the second device 220 before the second device 220 is delivered from a factory. The electronic tag 221 stores a tag ID of the electronic tag 221 and the Bluetooth address of the second device 220.

The tag ID of the electronic tag 221 can uniquely identify the electronic tag 221. The tag ID of the electronic tag 221 can also uniquely identify the second device 220. For example, the tag ID of the electronic tag 221 may be a product serial number (serial number, SN) of the second device 220. In this case, the electronic tag 221 stores the Bluetooth address of the second device. Therefore, when the distance between the NFC chip 211 and the electronic tag 221 is less than the preset threshold, the NFC chip 211 may send an electromagnetic wave, and in response to the electromagnetic wave, the electronic tag 221 may send data stored in the electronic tag 221 to the NFC chip 211, for example, the Bluetooth address of the second device 220 and the tag ID.

After obtaining the Bluetooth address of the second device 220, the first device 210 may first determine whether the first device 210 enables a Bluetooth function. If the first device 210 has enabled the Bluetooth function, the first device 210 may perform S304. If the first device 210 has not enabled the Bluetooth function, the first device 210 may first enable the Bluetooth function, and then perform S304.

S304. The first device 210 determines, based on the Bluetooth address of the second device 220, whether the first device 210 establishes a Bluetooth connection to the second device 220.

For example, it is assumed that the first device 210 has established Bluetooth connections to devices corresponding to two Bluetooth addresses. For example, the first device 210 establishes Bluetooth connections to a device corresponding to a Bluetooth address a and a device corresponding to a Bluetooth address b. If the Bluetooth address of the second device 220 is a Bluetooth address c, it indicates that the first device 210 has not established a Bluetooth connection to the second device 220, and the first device 210 may perform S305 and S306. If the Bluetooth address of the second device 220 is the Bluetooth address a, it indicates that the first device 210 has established a Bluetooth connection to the second device 220, and the first device 210 may perform S306.

S305. The first device 210 establishes a Bluetooth connection to the second device 220 based on the Bluetooth address.

S306. The first device 210 exchanges a Wi-Fi connection parameter with the second device 220 through the Bluetooth connection.

If the distance between the NFC chip 211 and the electronic tag 221 is less than the preset threshold, the electronic tag 221 may receive the electromagnetic wave sent by the NFC chip 211. In response to the electromagnetic wave, the second device 220 may serve as a soft (Soft) access point (Access Point, AP) to exchange the Wi-Fi connection parameter with the second device 220 serving as a station (Station, STA) through the Bluetooth connection.

S307. The first device 210 establishes a Wi-Fi connection to the second device 220 based on the Wi-Fi connection parameter.

For example, the Wi-Fi connection parameter may include parameters such as a service set identifier (service set identifier, SSID) and an access password (pass word, PWD) of the soft AP, a Wi-Fi capability of the STA (for example, the STA supports Wi-Fi 5G and Wi-Fi 2.4G, or the STA supports Wi-Fi 2.4G), and a transfer rate supported by the STA.

S308. The first device 210 determines that the first device 210 is currently in a first scenario.

In this embodiment of this application, the first device 210 may store scenario information and a priority of each of a plurality of preset scenarios. The scenario information includes at least any one of application identification information and user operation information, and the plurality of scenarios include the first scenario in which the first device 210 is located and a second scenario in which the second device 220 is located.

In an implementation (1), the scenario information may include the application identification information. As shown in Table 1, the plurality of preset scenarios may include a scenario 1 and a scenario 2. A priority of the scenario 1 is higher than that of the scenario 2. Application identification information in the scenario 1 includes application identification information of at least one preset identifiable application. Application identification information in the scenario 2 includes application identification information corresponding to a non-identifiable application.

**Table 1**

| Scenario information table | | |
|---|---|---|
| Scenario | Priority | Scenario information (application identification information) |
| Scenario 1 (Identifiable scenario) | 1 (high) | Application identification information of an identifiable application (for example, an application a, an application b, and an application c) |
| Scenario 2 (Non-identifiable scenario) | 2 (low) | Application identification information of a non-identifiable application |

Specifically, the first device 210 may obtain application identification information of the first application to which the first interface belongs. When the application identification information of the first application matches application identification information in the first scenario, the first device 210 may determine that the first device 210 is currently in the first scenario.

The first application is an application to which the first interface currently displayed by the first device 210 belongs. The application identification information of the first application may be a name of the first application. For example, it is assumed that the first interface is the graphical user interface 401 shown in FIG. 4A. The first application is a "Word" application, and the application identification information of the first application may be "Word".

That the application identification information of the first application matches application identification information in the first scenario specifically means that the application identification information of the first application is any application identification information included in scenario information in the first scenario. For example, as shown in Table 1, the scenario information in the scenario 1 includes the application identification information of the application a, the application b, and the application c. When the application identification information of the first application is the same as the application identification information of any one of the application a, the application b, or the application c, the first device 210 may determine that the first device 210 is currently in the scenario 1. When the application identification information of the first application is different from the application identification information of each of the application a, the application b, and the application c, the first device 210 may determine that the first device 210 is currently in the scenario 2.

It should be noted that, it can be learned from characteristics of the scenario information (application identification information) in the scenario 1 and the scenario 2 that the scenario 1 includes application identification information of an identifiable application, and the scenario 2 includes application identification information of a non-identifiable application. Therefore, as shown in Table 1, the scenario 1 may alternatively be referred to as an identifiable scenario, and the scenario 2 may alternatively be referred to as a non-identifiable scenario.

It may be understood that a graphical user interface of an identifiable application includes a file that can be transferred to another electronic device, and a graphical user interface of a non-identifiable application does not include a file that can be transferred to another electronic device. Therefore, a possibility that an electronic device sends a file to another electronic device in the scenario 1 (that is, an identifiable scenario) is higher than a possibility that the electronic device sends a file to another electronic device in the scenario 2 (that is, a non-identifiable scenario). The priority of the scenario 1 (that is, the identifiable scenario) is higher than that of the scenario 2 (that is, the non-identifiable scenario).

For example, the identifiable application may be a "Gallery" application or a "Photos" application, and the non-identifiable application is an application other than the "Gallery" application and the "Photos" application. When the first device 210 displays a graphical user interface of the "Gallery" application or the "Photos" application, the first device 210 is currently in the scenario 1. When the first device 210 displays a graphical user interface of an application other than the "Gallery" application and the "Photos" application, the first device 210 is currently in the scenario 2.

It should be noted that the graphical user interfaces of the "Gallery" application and the "Photos" application may include image information of a picture or a photo or image information of a video. When a current interface displayed by the first device 210 includes image information of a picture or a photo, a file sent by the first device 210 to the second device 220 is the picture or the photo. When the current interface displayed by the first device 210 includes image information of a video, a file sent by the first device 210 to the second device 220 is the video.

In an implementation (2), the scenario information includes the user operation information. The first device 210 may obtain user operation information corresponding to the first interface. When the user operation information corresponding to the first interface matches user operation information in the first scenario, the first device 210 may determine that the first device is currently in the first scenario.

In a case of the implementation (2), the user operation information corresponding to the first interface includes a moment at which the first device starts to display the first interface, or a moment at which the first device starts to display the first interface and a user operation received after the first device displays the first interface.

In this case, as shown in Table 2, the plurality of preset scenarios may include a scenario 1, a scenario 2, a scenario 3, and a scenario 4. A priority of the scenario 1 is higher than that of the scenario 2, the priority of the scenario 2 is higher than that of the scenario 3, and the priority of the scenario 3 is higher than that of the scenario 4.

**Table 2**

| Scenario information table | | | |
|---|---|---|---|
| Scenario | Priority | Scenario information (user operation information) | |
| Scenario 1 (Latest enabled scenario) | 1 (high) | A third operation used to trigger a device to display a current interface is received within a time period T1. | |
| Scenario 2 (Recently active scenario) | 2 | The third operation used to trigger the device to display the current interface is received within a time period T2. | A fourth operation is received after the current interface is displayed. |
| Scenario 3 (Recently inactive scenario) | 3 | The third operation used to trigger the device to display the current interface is received within the time period T2. | The fourth operation is not received after the current interface is displayed. |
| Scenario 4 (Passively enabled scenario) | 4 (low) | A fifth operation on a message from another electronic device is received, where the fifth operation triggers the device to display the current interface. | NULL |

As shown in Table 2, the user operation information in the scenario 1 includes: The electronic device (for example, the first device 210) receives, within the first preset time period (T1), the third operation used to trigger the electronic device to display the current interface.

The first preset time period (T1) is a time period before a first moment, and an end moment of T1 is the first moment. The first moment is a moment at which an NFC chip (for example, the NFC chip 211) of the electronic device (for example, the first device 210) approaches an electronic tag or an NFC chip (for example, the electronic tag 221 or the NFC chip 222) of another electronic device, that is, a moment at which the distance between the NFC chip 211 and the electronic tag 221 or the NFC chip 222 is less than the preset threshold. The third operation is an operation that is received by the electronic device (for example, the first device 210) and that is performed by a user on an application icon of the first application, or an operation that is received by the electronic device and that is performed by the user on a related interface of the first application. The electronic device (for example, the first device 210) may display the current interface (for example, the first interface 210) in response to the third operation.

As shown in Table 2, the user operation information in the scenario 2 includes: The electronic device receives, within the second preset time period (T2), the third operation used to trigger the electronic device to display the current interface, and the electronic device receives the fourth operation after displaying the current interface. The second preset time period (T2) is another time period before the first preset time period (T1). An end moment of the second preset time period (T2) is a start moment of the first preset time period (T1).

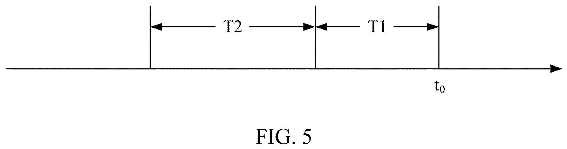

For example, it is assumed that the first moment is to, the first preset time period is T1 shown in FIG. 5, and the second preset time period is T2 shown in FIG. 5. The fourth operation is a preset user operation. For example, the fourth operation may be a swipe operation, a tap operation, or a touch and hold operation. The fourth operation does not include a screen locking operation or a screen unlocking operation.

As shown in Table 2, the user operation information in the scenario 3 includes: The electronic device receives, within the second preset time period (T2), the third operation used to trigger the electronic device to display the current interface, and the electronic device does not receive the fourth operation after displaying the current interface.

As shown in Table 2, the user operation information in the scenario 4 includes: The electronic device receives the fifth operation on the message from the another electronic device, and the electronic device displays the current interface (for example, the first interface) in response to the fifth operation.

The fifth operation is an operation performed by the user on the message from the another electronic device. The electronic device (for example, the first device 210) may display the current interface (for example, the first interface) in response to the fifth operation. For example, the another electronic device may send, to the first device 210, a "WeChat" message carrying a document a. After receiving the "WeChat" message, the first device 210 may display, in a notification bar, a notification used to prompt for the "WeChat" message. The first device 210 may receive a tap operation (for example, a single tap operation) performed by the user on the notification in the notification bar, and display a WeChat chat interface including the "WeChat" message. The first device 210 may receive a tap operation (for example, a single tap operation) performed by the user on the "WeChat" message in the WeChat chat interface, and display the first interface 401 shown in FIG. 4A. The fifth operation in this embodiment of this application may include the tap operation performed by the user on the notification in the notification bar and the tap operation performed by the user on the "WeChat" message in the WeChat chat interface. It should be noted that, although the electronic device may display the current interface (for example, the first interface) in response to the third operation or the fifth operation, the third operation is different from the fifth operation. The third operation is not an operation performed by the user on the message (for example, the "WeChat" message) from the another electronic device.

It should be noted that, it can be learned from characteristics of the user operation information in the scenario 1 to the scenario 4 that, when the electronic device is in the scenario 1, a moment at which the electronic device starts to display the current interface is closest to a current moment. In other words, the electronic device starts to display the current interface at a latest moment. Therefore, as shown in Table 2, the scenario 1 may alternatively be referred to as the latest enabled scenario.

When the electronic device is in the scenario 2, a moment at which the electronic device starts to display the current interface is earlier than the moment at which the electronic device starts to display the current interface in the scenario 1. Therefore, a possibility that the electronic device sends a file to another electronic device in the scenario 1 is higher than a possibility that the electronic device sends a file to another electronic device in the scenario 2. Therefore, the priority of the scenario 1 is higher than that of the scenario 2. As shown in Table 2, the scenario 2 may alternatively be referred to as the recently active scenario.

In the scenario 2, after displaying the current interface, the electronic device further receives the fourth operation performed by the user. However, in the scenario 3, after displaying the current interface, the electronic device does not receive the fourth operation performed by the user. Therefore, the possibility that the electronic device sends a file to another electronic device in the scenario 2 is higher than a possibility that the electronic device sends a file to another electronic device in the scenario 3. Therefore, the priority of the scenario 2 is higher than that of the scenario 3. As shown in Table 2, the scenario 3 may alternatively be referred to as the recently inactive scenario.

In the scenario 4, the electronic device passively displays the current interface. Therefore, a possibility that the electronic device sends a file to another electronic device in the scenario 4 is lower than the possibility that the electronic device sends a file to another electronic device in any one of the scenario 1 to the scenario 3. As shown in Table 2, the scenario 4 may alternatively be referred to as the passively enabled scenario.

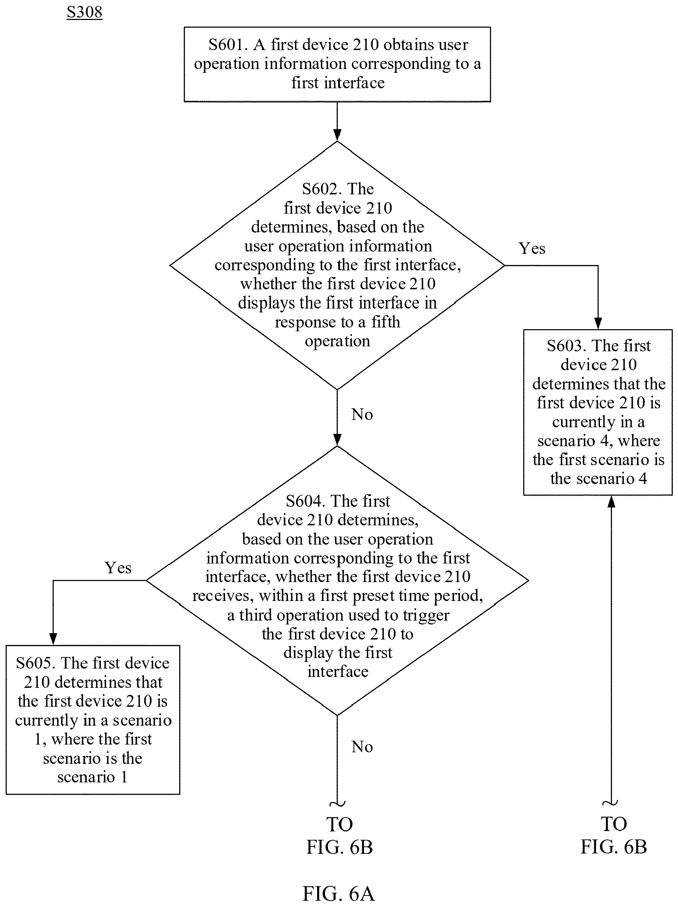

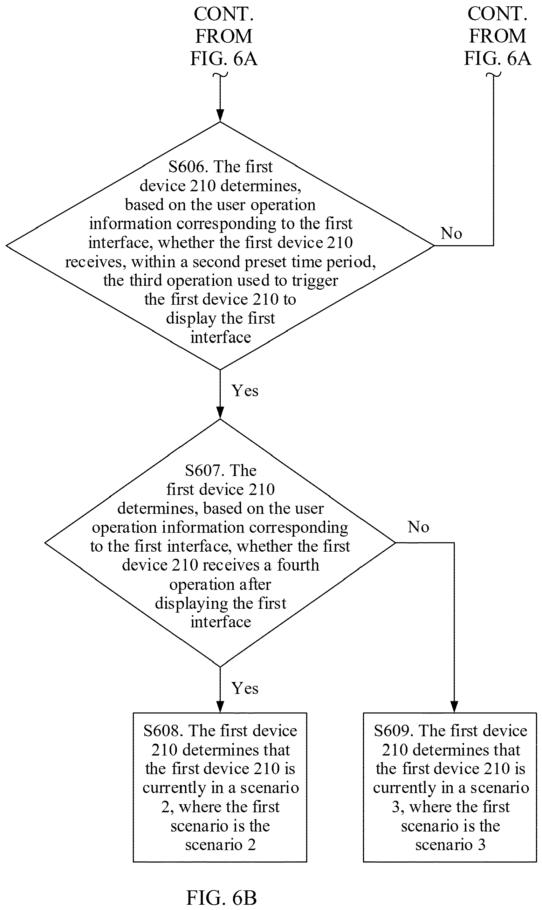

In the foregoing case of the implementation (2), as shown in FIG. 6A and FIG. 6B, S308 may include S601 to S609.

S601. The first device 210 obtains the user operation information corresponding to the first interface.

S602. The first device 210 determines, based on the user operation information corresponding to the first interface, whether the first device 210 displays the first interface in response to the fifth operation.

The first device 210 may determine, based on a result of determining whether the first device 210 displays the first interface in response to the fifth operation, whether the first device 210 is in the scenario 4. Specifically, if the first device 210 displays the first interface in response to the fifth operation, the first device 210 may determine that the first device is in the scenario 4, and the first device 210 may perform S603. If the first device 210 does not display the first interface in response to the fifth operation, the first device 210 may be in any one of the scenario 1, the scenario 2, or the scenario 3, and the first device 210 may perform S604.

S603. The first device 210 determines that the first device 210 is currently in the scenario 4, where the first scenario is the scenario 4.

For example, if the first device 210 receives, at any moment, the fifth operation performed by the user, the first device 210 may determine that the first device 210 is in the scenario 5, that is, the first scenario is the scenario 4. In this case, the first interface displayed by the first device 210 is a graphical user interface displayed in response to the fifth operation performed by the user on a message received from another electronic device (for example, the second device 220). For example, after receiving a "WeChat" message that carries a document a and that is sent by the another electronic device, the first device 210 may display, in a notification bar, a notification used to prompt for the "WeChat" message. The first device 210 may receive a tap operation (for example, a single tap operation) performed by the user on the notification in the notification bar, and display a WeChat chat interface including the "WeChat" message. The first device 210 may receive a tap operation (for example, a single tap operation) performed by the user on the "WeChat" message in the WeChat chat interface, and display the first interface 401 shown in FIG. 4A.

S604. The first device 210 determines, based on the user operation information corresponding to the first interface, whether the first device 210 receives, within the first preset time period, the third operation used to trigger the first device 210 to display the first interface.

Specifically, if the first device 210 receives, within the first preset time period, the third operation used to trigger the first device 210 to display the first interface, the first device 210 may perform S605. If the first device 210 does not receive, within the first preset time period, the third operation used to trigger the first device 210 to display the first interface, the first device 210 may perform S606.

S605. The first device 210 determines that the first device 210 is currently in the scenario 1, where the first scenario is the scenario 1.

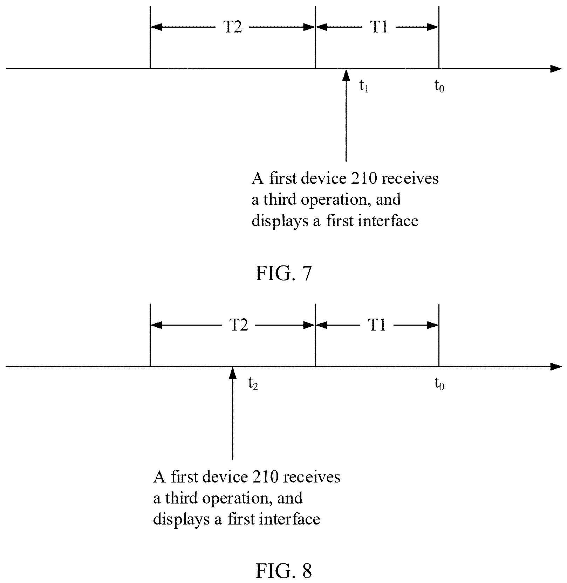

For example, as shown in FIG. 7, it is assumed that the first device 210 receives, at a moment t₁, the third operation used to trigger the first device 210 to display the first interface, and displays the first interface. Because t₁ is within the time period T1. With reference to Table 1, the first device 210 may determine that the first device 210 is in the scenario 1, that is, the first scenario is the scenario 1.

S606. The first device 210 determines, based on the user operation information corresponding to the first interface, whether the first device 210 receives, within the second preset time period, the third operation used to trigger the first device 210 to display the first interface.

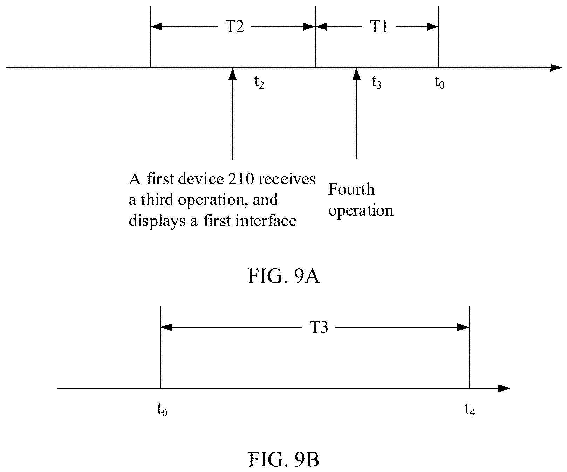

Specifically, if the first device 210 receives, within the second preset time period, the third operation used to trigger the first device 210 to display the first interface, the first device 210 may perform S607. For example, as shown in FIG. 8 or FIG. 9A, it is assumed that the first device 210 receives, at a moment t₂, the third operation used to trigger the first device 210 to display the first interface, and displays the first interface at the moment t₂. Because t₂ is within the time period T2, with reference to Table 1, the first device 210 may determine that the first device 210 is in the scenario 2 or the scenario 3. The first device 210 continues to perform S607, to determine whether the first device 210 receives the fourth operation performed by the user after displaying the first interface. Specifically, if the first device 210 does not receive, within the second preset time period, the third operation used to trigger the first device 210 to display the first interface, the first device 210 may perform S603.

S607. The first device 210 determines, based on the user operation information corresponding to the first interface, whether the first device 210 receives the fourth operation after displaying the first interface.

Specifically, if the first device 210 receives the fourth operation after displaying the first interface, the first device 210 may perform S608. If the first device 210 does not receive the fourth operation after displaying the first interface, the first device 210 may perform S609.

S608. The first device 210 determines that the first device 210 is currently in the scenario 2, where the first scenario is the scenario 2.

As shown in FIG. 9A, assuming that the first device 210 receives, at a moment t₃, the fourth operation performed by the user after displaying the first interface at the moment t₂, the first device 210 may determine that the first device 210 is in the scenario 2, that is, the first scenario is the scenario 2.

S609. The first device 210 determines that the first device 210 is currently in the scenario 3, where the first scenario is the scenario 3.

As shown in FIG. 8, assuming that the first device 210 does not receive the fourth operation performed by the user after displaying the first interface at the moment t₂, the first device 210 may determine that the first device 210 is in the scenario 3, that is, the first scenario is the scenario 3.

In another case of the implementation (2), the user operation information corresponding to the first interface includes the user operation received by the first device within the third preset time period, where an end moment of the third preset time period is a current moment.

As shown in Table 3, the plurality of preset scenarios may include a scenario 1 and a scenario 2. A priority of the scenario 1 is higher than that of the scenario 2. User operation information in the scenario 1 includes: An electronic device receives a user operation within the third preset time period. User operation information in the scenario 2 includes: The electronic device does not receive a user operation within the third preset time period. For example, it is assumed that the current moment is t₄, and the third preset time period is T3 shown in FIG. 9B. It may be understood that the current moment t₄ is before a first moment t₀. Optionally, as shown in FIG. 9B, a start moment of the third preset time period is the first moment t₀.

**Table 3**

| Scenario information table | | |
|---|---|---|
| Scenario | Priority | Scenario information (user operation information) |
| Scenario 1 | 1 (high) | A user operation is received within the time period T3. |
| Scenario 2 | 2 (low) | A user operation is not received within the time period T3. |

In this case, the first device 210 may determine whether the first device 210 receives a user operation within the third preset time period (T3). If the first device 210 receives a user operation, the first device 210 may determine that the first device is currently in the scenario 1, that is, the first scenario is the scenario 1. If the first device 210 does not receive a user operation, the first device 210 may determine that the first device is currently in the scenario 2, that is, the first scenario is the scenario 2.

The electronic device receives a user operation within the third preset time period in the scenario 1, but the electronic device does not receive a user operation within the third preset time period in the scenario 2. Therefore, a possibility that the electronic device sends a file to another electronic device in the scenario 1 is higher than a possibility that the electronic device sends a file to another electronic device in the scenario 2. Therefore, the priority of the scenario 1 is higher than that of the scenario 2.

For example, it is assumed that the first device 210 is a mobile phone, and the second device 220 is a PC. If the mobile phone receives a user operation within the third preset time period, but the PC does not receive a user operation within the third preset time period, it indicates that the user is using the mobile phone instead of the PC. In this case, a possibility that the mobile phone transfers a file to the PC is higher than a possibility that the PC transfers a file to the mobile phone. The mobile phone is in the scenario 1, and the PC is in the scenario 2. The priority of the scenario 1 is higher than that of the scenario 2.

In an implementation (3), the scenario information includes the application identification information and the user operation information. The first device 210 may obtain application identification information of the first application to which the first interface belongs and user operation information corresponding to the first interface. When the application identification information of the first application matches application identification information in the first scenario and the user operation information corresponding to the first interface matches user operation information in the first scenario, the first device 210 may determine that the first device is currently in the first scenario.

In the implementation (3), the plurality of preset scenarios include two or more of the following scenarios: a scenario 1, a scenario 2, a scenario 3, a scenario 4, and a scenario 5. For example, as shown in Table 4, it is assumed that the plurality of preset scenarios include the scenario 1, the scenario 2, the scenario 3, the scenario 4, and the scenario 5. A priority of the scenario 1 is higher than that of the scenario 2. The priority of the scenario 2 is higher than that of the scenario 3. The priority of the scenario 3 is higher than that of the scenario 4. The priority of the scenario 4 is higher than that of the scenario 5.

**Table 4**

| Scenario information table | | | |
|---|---|---|---|
| Scenario | Scenario information | | |
| | Application identification information | User operation information | |
| Scenario 1 (Latest enabled identifiable scenario) | Application identification information of an identifiable application (for example, an application a, an application b, and an application c) | A third operation used to trigger a device to display a current interface is received within a time period T1. | |
| Scenario 2 (Recently active identifiable scenario) | Application identification information of an identifiable application (for example, an application a, an application b, and an application c) | The third operation used to trigger the device to display the current interface is received within a time period T2. | A fourth operation is received after the current interface is displayed. |
| Scenario 3 (Recently inactive identifiable scenario) | Application identification information of an identifiable application (for example, an application a, an application b, and an application c) | The third operation used to trigger the device to display the current interface is received within the time period T2. | The fourth operation is not received after the current interface is displayed. |
| Scenario 4 (Non-identifiable scenario) | Application identification information of a non-identifiable application | NULL | NULL |
| Scenario 5 (Passively enabled identifiable scenario) | Application identification information of an identifiable application (for example, an application a, an application b, and an application c) | A fifth operation on a message from another electronic device is received, where the fifth operation triggers the device to display the current interface. | NULL |

As shown in Table 4, the application identification information in the scenario 1 includes application identification information of at least one preset identifiable application, for example, the application identification information of the application a, the application b, and the application c. The electronic device (for example, the first device 210) receives, within the first preset time period (T1), the third operation used to trigger the electronic device to display the current interface. For the first preset time period, refer to the description of the first preset time period in the foregoing embodiment. Details are not described again in this embodiment of this application.

As shown in Table 4, the application identification information in the scenario 2 includes the application identification information of the at least one preset identifiable application, for example, the application identification information of the application a, the application b, and the application c. The electronic device receives, within the second preset time period (T2), the third operation used to trigger the electronic device to display the current interface, and the electronic device receives the fourth operation after displaying the current interface. The second preset time period (T2) is another time period before the first preset time period (T1). An end moment of the second preset time period (T2) is a start moment of the first preset time period (T1).

As shown in Table 4, the application identification information in the scenario 3 includes the application identification information of the at least one preset identifiable application, for example, the application identification information of the application a, the application b, and the application c. The user operation information in the scenario 3 includes: The electronic device receives, within the second preset time period (T2), the third operation used to trigger the electronic device to display the current interface, and the electronic device does not receive the fourth operation after displaying the current interface.

As shown in Table 4, the application identification information in the scenario 4 includes application identification information corresponding to a non-identifiable application. For example, the application identification information in the scenario 4 includes application identification information of an application other than the application a, the application b, and the application c. The user operation information in the scenario 4 has no requirement on whether the electronic device receives a user operation or a moment at which the electronic device receives a user operation.

As shown in Table 4, the application identification information in the scenario 5 includes the application identification information of the at least one preset identifiable application, for example, the application identification information of the application a, the application b, and the application c. The user operation information in the scenario 5 includes: The electronic device receives the fifth operation on the message from the another electronic device, and the electronic device displays the current interface (for example, the first interface) in response to the fifth operation. The fifth operation is the same as the fifth operation described in the foregoing embodiment, and details are not described again in this embodiment of this application.

It should be noted that, it can be learned from characteristics of the user operation information in the scenario 1 to the scenario 5 that, when the electronic device is in the scenario 1, the current interface displayed by the electronic device is a graphical user interface of an identifiable application, and a moment at which the electronic device starts to display the current interface is closest to a current moment. Therefore, as shown in Table 4, the scenario 1 may alternatively be referred to as the latest enabled identifiable scenario.

When the electronic device is in the scenario 2, the current interface displayed by the electronic device is a graphical user interface of an identifiable application, and a moment at which the electronic device starts to display the current interface is earlier than the moment at which the electronic device starts to display the current interface in the scenario 1. Therefore, a possibility that the electronic device sends a file to another electronic device in the scenario 1 is higher than a possibility that the electronic device sends a file to another electronic device in the scenario 2. Therefore, the priority of the scenario 1 is higher than that of the scenario 2. As shown in Table 4, the scenario 2 may alternatively be referred to as the recently active identifiable scenario.

In the scenario 2, after displaying the current interface, the electronic device further receives the fourth operation performed by the user. However, in the scenario 3, after displaying the current interface, the electronic device does not receive the fourth operation performed by the user. Therefore, the possibility that the electronic device sends a file to another electronic device in the scenario 2 is higher than a possibility that the electronic device sends a file to another electronic device in the scenario 3. Therefore, the priority of the scenario 2 is higher than that of the scenario 3. In addition, in the scenario 3, the current interface displayed by the electronic device is a graphical user interface of an identifiable application. Therefore, as shown in Table 4, the scenario 3 may alternatively be referred to as the recently inactive identifiable scenario.

In the scenario 4, the current interface displayed by the electronic device is a graphical user interface of a non-identifiable application. Therefore, as shown in Table 4, the scenario 4 may alternatively be referred to as the non-identifiable scenario. A possibility that the electronic device sends a file to another electronic device in the scenario 4 is lower than the possibility that the electronic device sends a file to another electronic device in any one of the scenario 1 to the scenario 3. Therefore, the priority of the scenario 4 is lower than that of the scenario 3.

In the scenario 5, the electronic device passively displays the current interface. Therefore, a possibility that the electronic device sends a file to another electronic device in the scenario 5 is lower than the possibility that the electronic device sends a file to another electronic device in any one of the scenario 1 to the scenario 4. In addition, in the scenario 5, the current interface displayed by the electronic device is a graphical user interface of a non-identifiable application. Therefore, as shown in Table 4, the scenario 5 may alternatively be referred to as the passively enabled identifiable scenario.

In the implementation (3), as shown in FIG. 9C-1 and FIG. 9C-2, S308 may include S901 to S911.

S901. The first device 210 obtains the user operation information corresponding to the first interface.

S902. The first device 210 determines, based on the application identification information of the first application, whether the first application is an identifiable application.

For the first device 210, the current interface in Table 1 is the first interface displayed by the first device 210.

For example, it is assumed that the first interface is the graphical user interface 401 shown in FIG. 4A, and the first application is a "Word" application. The first device 210 may obtain an identifier of the "Word" application corresponding to the first interface 401, and obtain the user operation information corresponding to the first interface. The second device 220 may compare the identifier of the "Word" application with the plurality of preset identifiable applications indicated by the application requirement information in the scenarios shown in Table 1, to determine whether the first application is an identifiable application.

Specifically, if the first application is not an identifiable application, the first device 210 may determine that the first device 210 is currently in the scenario 4, and the first device 210 may perform S903. If the first application is any one of the identifiable applications, the first device 210 may determine that the first device 210 is not in the scenario 4 currently. The first device 210 may be in any one of the scenario 1, the scenario 2, the scenario 3, or the scenario 5, and the first device 210 may perform S904.

S903. The first device 210 determines that the first device 210 is currently in the scenario 4, where the first scenario is the scenario 4.

For example, when the "Word" application is not the application a, the application b, or the application c shown in Table 1, the first device 210 may determine that the first device 210 is currently in the scenario 4. The plurality of preset identifiable applications shown in Table 1 include the application a, the application b, and the application c. The another application in the scenario 4 shown in Table 1 is an application other than the plurality of preset identifiable applications (that is, the application a, the application b, and the application c).

When the "Word" application is any one of the application a, the application b, and the application c shown in Table 1, the first device 210 may determine whether the user operation information corresponding to the first interface matches the operation requirement information in any one of the scenario 1, the scenario 2, the scenario 3, or the scenario 5. Specifically, the first device 210 may perform S904.

S904. The first device 210 determines, based on the user operation information corresponding to the first interface, whether the first device 210 displays the first interface in response to the fifth operation.

The first device 210 may determine, based on a result of determining whether the first device 210 displays the first interface in response to the fifth operation, whether the first device 210 is in the scenario 5. Specifically, if the first device 210 displays the first interface in response to the fifth operation, the first device 210 may determine that the first device is in the scenario 5, and the first device 210 may perform S905. If the first device 210 does not display the first interface in response to the fifth operation, the first device 210 may be in any one of the scenario 1, the scenario 2, or the scenario 3, and the first device 210 may perform S906.

S905. The first device 210 determines that the first device 210 is currently in the scenario 5, where the first scenario is the scenario 5.

For example, if the first device 210 receives, at any moment, the fifth operation performed by the user, the first device 210 may determine that the first device 210 is in the scenario 5, that is, the first scenario is the scenario 5. In this case, the first interface displayed by the first device 210 is a graphical user interface displayed in response to the fifth operation performed by the user on a message received from another electronic device (for example, the second device 220). For example, after receiving a "WeChat" message that carries a document a and that is sent by the another electronic device, the first device 210 may display, in a notification bar, a notification used to prompt for the "WeChat" message. The first device 210 may receive a tap operation (for example, a single tap operation) performed by the user on the notification in the notification bar, and display a WeChat chat interface including the "WeChat" message. The first device 210 may receive a tap operation (for example, a single tap operation) performed by the user on the "WeChat" message in the WeChat chat interface, and display the first interface 401 shown in FIG. 4A.

S906. The first device 210 determines, based on the user operation information corresponding to the first interface, whether the first device 210 receives, within the first preset time period, the third operation used to trigger the first device 210 to display the first interface.

Specifically, if the first device 210 receives, within the first preset time period, the third operation used to trigger the first device 210 to display the first interface, the first device 210 may perform S907. If the first device 210 does not receive, within the first preset time period, the third operation used to trigger the first device 210 to display the first interface, the first device 210 may perform S908.

S907. The first device 210 determines that the first device 210 is currently in the scenario 1, where the first scenario is the scenario 1.

For example, as shown in FIG. 7, it is assumed that the first device 210 receives, at a moment t₁, the third operation used to trigger the first device 210 to display the first interface, and displays the first interface. Because t₁ is within the time period T1, with reference to Table 1, the first device 210 may determine that the first device 210 is in the scenario 1, that is, the first scenario is the scenario 1.

S908. The first device 210 determines, based on the user operation information corresponding to the first interface, whether the first device 210 receives, within the second preset time period, the third operation used to trigger the first device 210 to display the first interface.

Specifically, if the first device 210 receives, within the second preset time period, the third operation used to trigger the first device 210 to display the first interface, the first device 210 may perform S909. For example, as shown in FIG. 8 or FIG. 9A, it is assumed that the first device 210 receives, at a moment t₂, the third operation used to trigger the first device 210 to display the first interface, and displays the first interface at the moment t₂. Because t₂ is within the time period T2, with reference to Table 1, the first device 210 may determine that the first device 210 is in the scenario 2 or the scenario 3. The first device 210 continues to perform S308h, to determine whether the first device 210 receives the fourth operation performed by the user after displaying the first interface. Specifically, if the first device 210 does not receive, within the second preset time period, the third operation used to trigger the first device 210 to display the first interface, the first device 210 may perform S903.

S909. The first device 210 determines, based on the user operation information corresponding to the first interface, whether the first device 210 receives the fourth operation after displaying the first interface.

Specifically, if the first device 210 receives the fourth operation after displaying the first interface, the first device 210 may perform S910. If the first device 210 does not receive the fourth operation after displaying the first interface, the first device 210 may perform S911.

S910. The first device 210 determines that the first device 210 is currently in the scenario 2, where the first scenario is the scenario 2.

As shown in FIG. 9A, assuming that the first device 210 receives, at a moment t₃, the fourth operation performed by the user after displaying the first interface at the moment t₂, the first device 210 may determine that the first device 210 is in the scenario 2, that is, the first scenario is the scenario 2.

S911. The first device 210 determines that the first device 210 is currently in the scenario 3, where the first scenario is the scenario 3.

As shown in FIG. 8, assuming that the first device 210 does not receive the fourth operation performed by the user after displaying the first interface at the moment t₂, the first device 210 may determine that the first device 210 is in the scenario 3, that is, the first scenario is the scenario 3.

In an implementation (4), the scenario information includes the user operation information. The plurality of preset scenarios stored in the first device 210 may include a scenario 1 and a scenario 2. A priority of the scenario 1 is higher than that of the scenario 2. As shown in Table 5, user operation information in the scenario 1 includes: An electronic device receives a preset user operation (for example, a shake operation or a knock operation) within a fourth preset time period (T4). User operation information in the scenario 2 includes: The electronic device does not receive the preset user operation within the fourth preset time period (T4). The fourth preset time period is a time period using a moment for NFC contact (that is, a moment at which the distance between the first NFC chip and the second NFC chip or the electronic tag is less than the preset threshold) as a start moment or an end moment. In other words, if the electronic device receives the preset user operation within a time period before the moment for NFC contact or within a time period after the moment for NFC contact, the electronic device is in the scenario 1. The electronic device may collect the preset user operation (for example, the shake operation) by using a sensor (for example, an acceleration sensor).

**Table 5**

| Scenario information table | | |
|---|---|---|
| Scenario | Priority | Scenario information (user operation information) |
| Scenario 1 | 1 (high) | The preset user operation is received within the time period T4. |
| Scenario 2 | 2 (low) | The preset user operation is not received within the time |
| | | period T4. |

In this case, the first device 210 may determine whether the first device 210 receives the preset user operation within the fourth preset time period (T4). If the first device 210 receives the preset user operation, the first device 210 may determine that the first device is currently in the scenario 1, that is, the first scenario is the scenario 1. If the first device 210 does not receive the preset user operation, the first device 210 may determine that the first device is currently in the scenario 2, that is, the first scenario is the scenario 2.

The electronic device receives the preset user operation within the fourth preset time period in the scenario 1, but the electronic device does not receive the preset user operation within the fourth preset time period in the scenario 2. Therefore, a possibility that the electronic device sends a file to another electronic device in the scenario 1 is higher than a possibility that the electronic device sends a file to another electronic device in the scenario 2. Therefore, the priority of the scenario 1 is higher than that of the scenario 2.

For example, it is assumed that the first device 210 is a mobile phone, and the second device 220 is a PC. If the mobile phone receives the preset user operation within the fourth preset time period, but the PC does not receive the preset user operation within the fourth preset time period, it indicates that the user is using the mobile phone instead of the PC. In this case, a possibility that the mobile phone transfers a file to the PC is higher than a possibility that the PC transfers a file to the mobile phone. The mobile phone is in the scenario 1, and the PC is in the scenario 2. The priority of the scenario 1 is higher than that of the scenario 2.

S309. The second device 220 determines that the second device 220 is currently in the second scenario.

When application identification information of the second application (that is, the application to which the second interface belongs) matches application identification information in the second scenario, the second device 220 may determine that the second device 220 is currently in the second scenario. Alternatively, when user operation information of the second interface matches user operation information in the second scenario, the second device 220 may determine that the second device 220 is currently in the second scenario. Alternatively, when application identification information of the second application matches application identification information in the second scenario, and user operation information of the second interface matches user operation information in the second scenario, the second device 220 may determine that the second device 220 is currently in the second scenario.

It should be noted that a method in which the second device 220 determines that the second device 220 is currently in the second scenario is similar to the method in which the first device 210 determines that the first device 210 is currently in the first scenario. Details are not described again in this embodiment of this application.

S310. The second device 220 notifies the first device 210 of the second scenario.

After determining the second scenario, the second device 220 may notify the first device 210 of the second scenario through the Bluetooth connection or the Wi-Fi connection.

S311. The first device 210 receives the second scenario notified by the second device.

The first device 210 may receive the second scenario notified by the second device 220 through the Bluetooth connection or the Wi-Fi connection. Specifically, the second device 220 may notify, through the Bluetooth connection or the Wi-Fi connection, the first device 210 that the second device 220 is in the second scenario.

For example, the second device 220 may send scenario indication information to the first device 210 through the Bluetooth connection or the Wi-Fi connection. The scenario indication information is used to indicate that the second device 220 is currently in the second scenario. Different scenario indication information is used to indicate different scenarios. For example, scenario indication information "001" may be used to indicate the scenario 1, scenario indication information "010" may be used to indicate the scenario 2, scenario indication information "011" may be used to indicate the scenario 3, scenario indication information "100" may be used to indicate the scenario 4, and scenario indication information "101" may be used to indicate the scenario 5.

S312. The first device 210 determines whether a priority of the first scenario is higher than or equal to a priority of the second scenario.

In some embodiments, the first device 210 may separately store scenario information and priority information in the scenarios. In an example of the implementation (3), the first device 210 may store the scenario information in the scenarios into the scenario information table shown in Table 4, and store the priority information in the scenarios into a priority information table shown in Table 6. For example, the first device 210 may store the priorities of the scenario 1 to the scenario 5 into the priority information table shown in Table 6.

**Table 6**

| Priority information table | |
|---|---|
| Scenario | Priority |
| Scenario 1 | 1 (high) |
| Scenario 2 | 2 |
| Scenario 3 | 3 |
| Scenario 4 | 4 |
| Scenario 5 | 5 (low) |

As shown in Table 6, the priority of the scenario 1 is 1, the priority of the scenario 2 is 2, the priority of the scenario 3 is 3, the priority of the scenario 4 is 4, and the priority of the scenario 5 is 5. The priority of the scenario 1 is higher than that of the scenario 2. The priority of the scenario 2 is higher than that of the scenario 3. The priority of the scenario 3 is higher than that of the scenario 4. The priority of the scenario 4 is higher than that of the scenario 5.

In some other embodiments, the first device 210 may store scenario information and priority information in the scenarios together. In an example of the implementation (3), the first device 210 may store the scenario information and the priority information in the scenarios into a scenario information table shown in Table 7.

**Table 7**

| Scenario information table | | | | |
|---|---|---|---|---|
| Scenario | Priority | Scenario information | | |
| | | Application identification information | User operation information | |
| Scenario 1 | 1 (high) | Application identification information of an identifiable application (for example, an application a, an application | A third operation used to trigger a device to display a current interface is received within a time period T1. | |

| Application identification information | | | User operation information | |
|---|---|---|---|---|
| | | b, and an application c) | | |
| Scenario 2 | 2 | Application identification information of an identifiable application (for example, an application a, an application b, and an application c) | The third operation used to trigger the device to display the current interface is received within a time period T2. | A fourth operation is received after the current interface is displayed. |
| Scenario 3 | 3 | Application identification information of an identifiable application (for example, an application a, an application b, and an application c) | The third operation used to trigger the device to display the current interface is received within the time period T2. | The fourth operation is not received after the current interface is displayed. |
| Scenario 4 | 4 | Non-identifiable application | NULL | NULL |
| Scenario 5 | 5 (low) | Application identification information of an identifiable application (for example, an application a, an application b, and an application c) | A fifth operation on a message from another electronic device is received, where the fifth operation triggers the device to display the current interface. | NULL |

As shown in Table 7, the priority of the scenario 1 is 1, the priority of the scenario 2 is 2, the priority of the scenario 3 is 3, the priority of the scenario 4 is 4, and the priority of the scenario 5 is 5. The priority of the scenario 1 is higher than that of the scenario 2. The priority of the scenario 2 is higher than that of the scenario 3. The priority of the scenario 3 is higher than that of the scenario 4. The priority of the scenario 4 is higher than that of the scenario 5.

After determining that the first device 210 is in the first scenario, and receiving the second scenario notified by the second device 220, the first device 210 may search Table 6 or Table 7 for the priorities of the first scenario and the second scenario, and then compare the priorities of the first scenario and the second scenario.

With reference to the scenario information table shown in Table 7, as shown in Table 8, a principle of determining a file transfer direction by the first device 210 and the second device 220 in this embodiment of this application is shown in a table in this embodiment of this application.

**Table 8**

| Table showing a file transfer direction determining principle | | |
|---|---|---|
| Scenario in which the first device 210 is located | Scenario in which the second device 220 is located | File transfer direction |
| Scenario 1 | Scenario 1 | The user selects the transfer direction in a third interface. |
| | Scenario 2/Scenario 3/Scenario 4/Scenario 5 | First device 210 --> second device 220 |
| Scenario 2 | Scenario 1 | Second device 220 --> first device 210 |
| | Scenario 2 | The user selects the transfer direction in a third interface. |
| | Scenario 3/Scenario 4/Scenario 5 | First device 210 --> second device 220 |
| Scenario 3 | Scenario 1/Scenario 2 | Second device 220 --> first device 210 |
| | Scenario 3 | The user selects the transfer direction in a third interface. |
| | Scenario 4/Scenario 5 | First device 210 --> second device 220 |
| Scenario 4 | Scenario 1/Scenario 2/Scenario 3 | Second device 220 --> first device 210 |
| | Scenario 4 | The user selects the transfer direction in a third interface. |
| | Scenario 5 | First device 210 --> second device 220 |
| Scenario 5 | Scenario 1/Scenario 2/Scenario 3/Scenario 4 | Second device 220 --> first device 210 |
| | Scenario 5 | The user selects the transfer direction in a third interface. |

Specifically, if the priority of the first scenario is higher than that of the second scenario, the first device 210 may determine that the file transfer direction is that the first device 210 transfers a file to the second device 220. For example, as shown in Table 8, when the first device 210 is in the scenario 1, and the second device 220 is in any one of the scenario 2, the scenario 3, the scenario 4, or the scenario 5, the first device 210 may determine that the file transfer direction is that the first device 210 transfers a file to the second device 220. In this case, the first device 210 may perform S313.

If the priority of the first scenario is lower than that of the second scenario, the first device 210 may determine that the file transfer direction is that the second device 220 transfers a file to the first device 210. For example, as shown in Table 8, when the first device 210 is in the scenario 2, and the second device 220 is in the scenario 1, the first device 210 may determine that the file transfer direction is that the second device 220 transfers a file to the first device 210. In this case, the first device 210 may perform S314.

If the priority of the first scenario is the same as that of the second scenario, the first device 210 may display the third interface, and the user selects the file transfer direction in the third interface. For example, as shown in Table 8, when both the first device 210 and the second device 220 are in the scenario 1, the user may select the file transfer direction in the third interface. In this case, the first device 210 may perform S317.

S313. The first device 210 sends a first file corresponding to the first interface to the second device 220 through the Wi-Fi connection.

The first device 210 may transfer, to the second device 220 through the Wi-Fi connection, the first file associated with the current interface (that is, the first interface) displayed by the first device 210.

For example, when the first interface is a video playing interface, the first file sent by the first device 210 to the second device 220 through the Wi-Fi connection may be a video file that is being played by the first device 210. When the first interface is a browser page, the first file sent by the first device 210 to the second device 220 through the Wi-Fi connection may be a page address or a screenshot of the page. When the first interface is a home screen (that is, a home screen) of the first device 210, the first file sent by the first device 210 to the second device 220 through the Wi-Fi connection may be a screenshot of the home screen.

The second device 220 may receive the first file sent by the first device 210 through the Wi-Fi connection.

In some embodiments, after receiving the first file sent by the first device 210, the second device 220 may automatically open the first file, and display a graphical user interface of the first file.

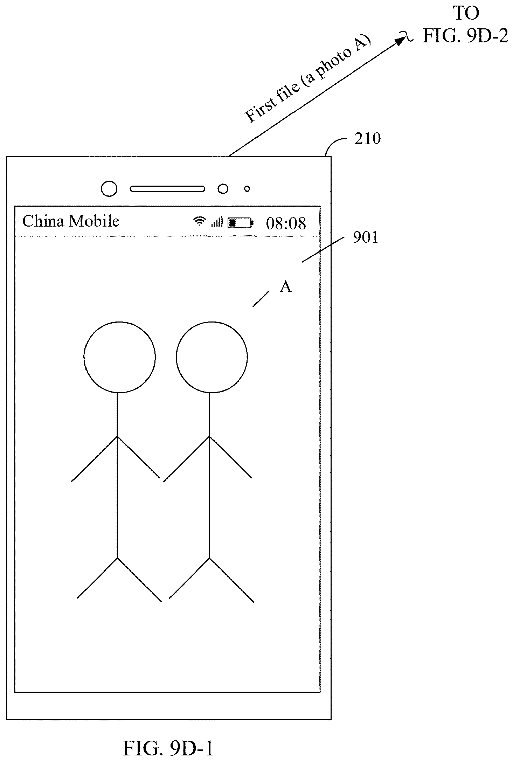

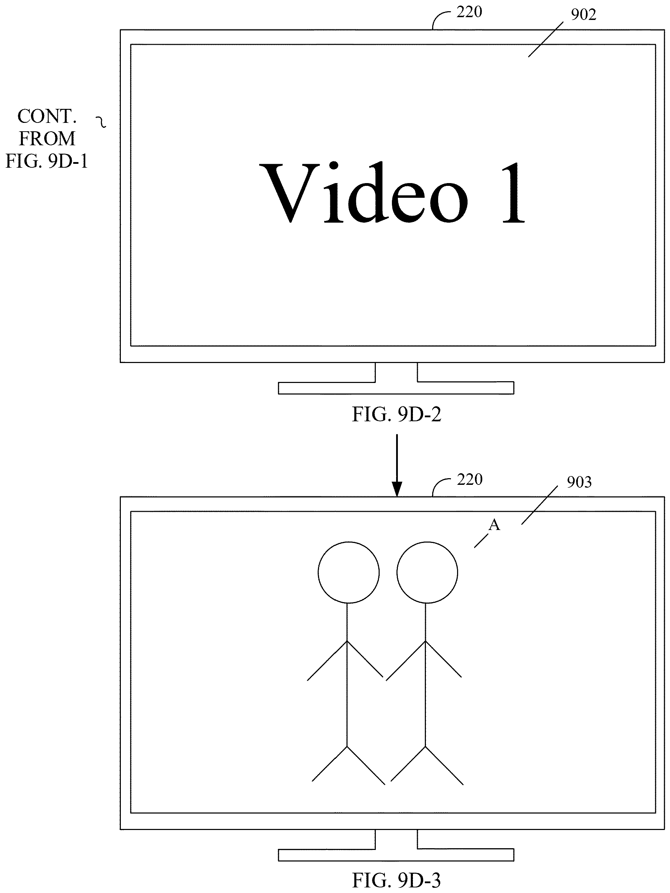

For example, it is assumed that the first device 210 displays a first interface 901 shown in FIG. 9D-1, and the second device 220 displays a second interface 902 shown in FIG. 9D-2. The first interface 901 shown in FIG. 9D-1 includes a photo A. The second interface 902 shown in FIG. 9D-2 is a playing interface of a video 1. The first device 210 may perform S313 to send the first file (for example, the photo A) to the second device 220. After receiving the first file (for example, the photo A), the second device 220 may automatically open the received photo A, and display a graphical user interface 903 of the photo A shown in in FIG. 9D-3.

In some other embodiments, after receiving the first file sent by the first device 210, the second device 220 may display prompt information of the first file. The prompt information is used to indicate that the second device 220 receives the first file. The prompt information may be further used to determine whether to display the first file. For example, with reference to the first interface 901 shown in FIG. 9D-1 and the second interface 902 shown in FIG. 9D-2, after receiving the first file (for example, the photo A), as shown in FIG. 9E, the second device 220 may display prompt information 904 "New message: You've got a photo. Display it or not?" in a notification bar. The prompt information 904 may further include a "display" button 905 and a "cancel" button 906. The "display" button 905 is used to trigger the second device 220 to display the graphical user interface 903 of the photo A shown in FIG. 9D-3. The "cancel" button 906 is used to trigger the second device 220 to close the prompt information 904. After the second device 220 displays the prompt information 904 shown in FIG. 9E, if the second device 220 does not receive, within a time period (for example, two minutes), a tap operation (for example, a single tap operation) performed by the user on the "display" button 905 or the "cancel" button 906, the prompt information 904 may automatically disappear, that is, the second device 220 does not display the prompt information 904.

A method in which the second device 220 displays the prompt information of the first file includes but is not limited to displaying the prompt information in the notification bar. For example, the second device 220 may further display a prompt window including the prompt information. A specific manner of displaying the prompt information by the second device 220 is not limited in this embodiment of this application.

S314. The first device 210 sends a notification message to the second device 220, where the notification message is used to indicate the second device 220 to transfer a file to the first device 210.

The first device 210 may send the notification message to the second device 220 through the Bluetooth connection or the Wi-Fi connection.

S315. The second device 220 receives the notification message sent by the first device 210.

S316. In response to the notification message, the second device 220 sends a second file corresponding to the second interface to the first device 210 through the Wi-Fi connection.

The second device 220 may transfer, to the first device 210 through the Wi-Fi connection, the second file associated with the current interface (that is, the second interface) displayed by the second device 220.

For example, when the second interface is a video playing interface, the second file sent by the second device 220 to the first device 210 through the Wi-Fi connection may be a video file that is being played by the second device 220. When the second interface is a browser page, the second file sent by the second device 220 to the first device 210 through the Wi-Fi connection may be a page address or a screenshot of the page. When the second interface is a home screen (that is, the home screen) of the second device 220, the second file sent by the second device 220 to the first device 210 through the Wi-Fi connection may be a screenshot of the home screen.

The first device 210 may receive the second file sent by the second device 220 through the Wi-Fi connection. In some embodiments, after receiving the second file sent by the second device 220, the first device 210 may automatically open the second file, and display a graphical user interface of the second file. In some other embodiments, after receiving the second file sent by the second device 220, the first device 210 may display prompt information of the second file. The prompt information is used to indicate that the first device 210 receives the second file. The prompt information may be further used to determine whether to display the second file. For a method in which the first device 210 displays the prompt information of the second file, refer to the method in which the second device 220 displays the prompt information of the first file in the foregoing embodiment. Details are not described again in this embodiment of this application.

S317. The first device 210 displays the third interface.

The third interface is used to determine whether the first device 210 transfers a file to the second device 220 or the second device 220 transfers a file to the first device 210.

After the first device 210 displays the third interface, the first device 210 may receive a first operation (for example, S318) used to indicate the first device 210 to transfer a file to the second device 220, or the first device 210 may receive a second operation (for example, S319) used to indicate the second device 220 to transfer a file to the first device 210. That is, after S317, the method in this embodiment of this application may further include S318 or S319.

S318. The first device 210 receives the first operation performed by the user in the third interface, where the first operation is used to indicate the first device 210 to transfer a file to the second device 220.

For example, the first operation may be a first preset gesture entered by the user in the third interface, for example, an S-shaped gesture or an upward swipe gesture. Alternatively, the first operation may be a selection operation performed by the user on an option that is in the third interface and that is used to select a direction that the first device 210 transfers a file to the second device 220.

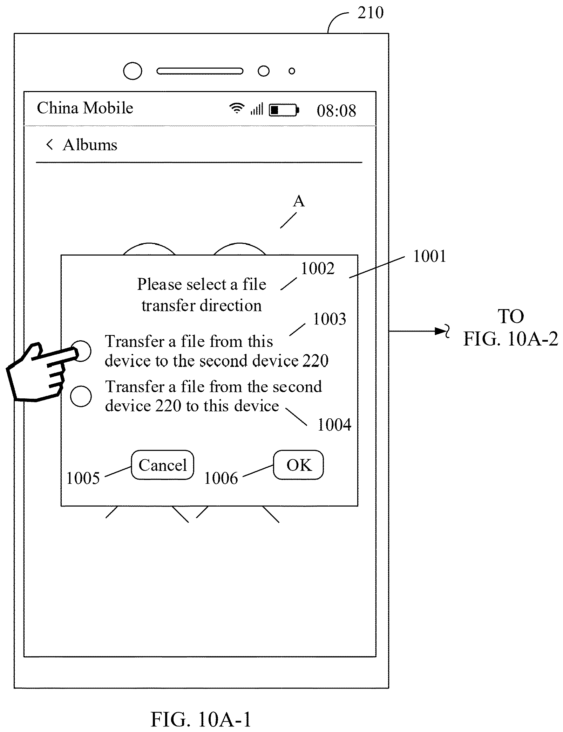

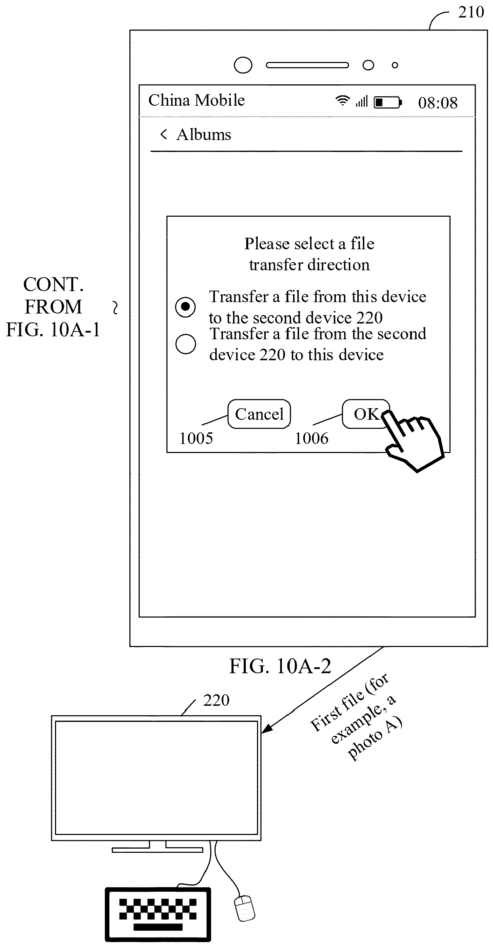

For example, the first device 210 may display a third interface 1001 shown in FIG. 10A-1. The third interface 1001 is used to determine whether the first device 210 transfers a file to the second device 220 or the second device 220 transfers a file to the first device 210. The third interface 1001 includes prompt information 1002 "Please select a file transfer direction", a direction option 1003 "Transfer a file from this device to the second device 220", a direction option 1004 "Transfer a file from the second device 220 to this device", a "cancel" button 1005, and an "OK" button 1006.

The first device 210 may receive a tap operation (for example, a single tap operation) performed by the user on the direction option 1003 "Transfer a file from this device to the second device 220". In response to the tap operation performed by the user on the direction option 1003 "Transfer a file from this device to the second device 220", the first device 210 may display a graphical user interface shown in FIG. 10A-2. The first device 210 may receive a tap operation (for example, a single tap operation) performed by the user on the "OK" button 1006 shown in FIG. 10A-2. In response to the tap operation performed by the user on the "OK" button 1006 shown in FIG. 10A-2, the first device 210 may transfer the first file to the second device 220, for example, the photo A in the first interface 401 shown in FIG. 9B-1. The first operation may include the tap operation performed by the user on the direction option 1003 "Transfer a file from this device to the second device 220" and the tap operation performed by the user on the "OK" button 1006 shown in FIG. 10A-2.

After S318, in response to the first operation, the first device 210 may send the first file corresponding to the first interface to the second device 220 through the Wi-Fi connection. In other words, after S318, the method in this embodiment of this application may further include S313. As shown in FIG. 3A to FIG. 3C, after S318, the first device 210 may perform S313 in response to the first operation.

S319. The first device 210 receives the second operation performed by the user in the third interface, where the second operation is used to indicate the second device to transfer a file to the first device.

For example, the second operation may include a tap operation performed by the user on the direction option 1004 "Transfer a file from the second device 220 to this device" and a tap operation performed by the user on the "OK" button 1006.

After S319, in response to the second operation, the first device 210 may receive the second file sent by the second device 220 through the Wi-Fi connection. To be specific, after S319, the first device 210 may send the notification message to the second device 220, to indicate the second device 220 to transfer a file to the first device 210. As shown in FIG. 3A to FIG. 3C, after S319, the first device 210 may perform S314 in response to the second operation.

According to the data transfer method provided in this embodiment of this application, when the first device displays the first interface corresponding to the first file, if the NFC chip 211 of the first device 210 approaches the electronic tag 221 or the NFC chip 222 of the second device 220, the first device 210 may obtain the Bluetooth address of the second device 220. Subsequently, the first device 210 may determine that the first device 210 is in the first scenario, receive the second scenario in which the second device 220 is located and that is notified by the second device 220, compare the priorities of the first scenario and the second scenario, and then determine the file transfer direction based on the priorities of the first scenario and the second scenario. A device in a scenario with a higher priority transfers a file to a device in a scenario with a lower priority. In this embodiment of this application, the file transfer direction is determined before the first device 210 or the second device 220 transfers a file. In this way, file mis-transfer can be avoided, and file transfer accuracy can be improved.

An application to which a current interface displayed by an electronic device belongs, and/or a moment at which the electronic device starts to display the current interface and whether the electronic device receives a user operation after displaying the current interface may reflect a possibility that the electronic device transfers a file to another electronic device. The possibility that the electronic device transfers a file to another electronic device may be represented by a priority, of a scenario in which the electronic device is currently located, that is determined based on the application to which the current interface displayed by the electronic device belongs, the moment at which the electronic device starts to display the current interface, and whether the electronic device receives a user operation after displaying the current interface. Therefore, a file transfer direction is determined based on priorities of the scenarios in which the two electronic devices are located, to improve accuracy of the file transfer direction, avoid file mis-transfer, and improve file transfer accuracy.

In some embodiments of this application, the first device 210 may perform S308 after the first device 210 establishes the Wi-Fi connection to the second device 220, and the second device 220 may perform S309 after the first device 210 establishes the Wi-Fi connection to the second device 220. That is, the first device 210 and the second device 220 may first perform S303 to S307, and then perform S308 and S309. In this case, the second device 220 may notify the first device 210 of the first scenario through the Bluetooth connection or the Wi-Fi connection.

Alternatively, the first device 210 and the second device 220 may start to perform S308 and S309 when the distance between the NFC chip 211 and the electronic tag 221 or the NFC chip 222 is less than the preset threshold, and then S310 is performed after the first device 210 establishes the Bluetooth connection (that is, S305) or the Wi-Fi connection (S307) to the second device 220.

In the foregoing embodiment, the second device 220 notifies the first device 210 of the second scenario in which the second device 220 is located. The first device 210 compares the priorities of the first scenario and the second scenario, and when the priority of the first scenario is lower than that of the second scenario, the first device 210 indicates the second device 220 to transfer a file to the first device 210. In this embodiment, the second device 220 does not need to compare the priorities of the first scenario and the second scenario.

However, in some other embodiments, not only the second device 220 notifies the first device 210 of the second scenario in which the second device 220 is located, but also the first device 210 may notify the second device 220 of the first scenario in which the first device 210 is located.

In this embodiment, both the first device 210 and the second device 220 may compare the priorities of the first scenario and the second scenario, and then determine the file transfer direction based on a comparison result. The first device 210 does not need to send the notification message to the second device 220. The first device 210 and the second device 220 determine a same transfer direction by comparing the priorities of the first scenario and the second scenario. For example, when both the first device 210 and the second device 220 determine that the priority of the first scenario is higher than that of the second scenario, the first device 210 may transfer the first file to the second device 220, and the second device 220 may wait to receive the first file transferred by the first device 210. When both the first device 210 and the second device 220 determine that the priority of the first scenario is lower than that of the second scenario, the second device 220 may transfer the second file to the first device 210, and the first device 210 may wait to receive the second file transferred by the second device 220. When both the first device 210 and the second device 220 determine that the priority of the first scenario is the same as that of the second scenario, the first device 210 and/or the second device 220 may display the third interface, and the user selects the transfer direction. The user may select the transfer direction in the third interface displayed by any one of the first device 210 or the second device 220.

It should be noted that, in this embodiment of this application, when the first device 210 serves as a soft AP to establish a Wi-Fi connection to the second device 220 serving as a STA, the first device 210 and the second device 220 may also serve as STAs to access a Wi-Fi network provided by a third device (for example, a router). For example, as shown in FIG. 10B, the first device 210 serves as the soft AP to establish the Wi-Fi connection to the second device 220 serving as the STA. In addition, both the first device 210 and the second device 220 may serve as STAs to access a Wi-Fi network provided by a third device 300 (for example, a router) serving as an AP, and establish Wi-Fi connections to the third device 300.

In some other embodiments, the second device 220 is provided with the electronic chip 221. The electronic tag 221 is added to the second device 220 after the second device 220 is delivered from a factory. For example, the electronic tag may be pasted on the second device 220 by the user or a vendor. The electronic tag 221 stores the tag ID of the electronic tag 221. Because the electronic tag 221 is added to the second device 220 after delivery, the electronic tag 221 does not include information about the second device 220 (for example, the Bluetooth address of the second device 220). The tag ID of the electronic tag 221 can uniquely identify the electronic tag 221, but cannot identify the second device 220.

In the foregoing embodiment, the electronic tag 221 includes the Bluetooth address of the second device 220. Therefore, when the distance between the NFC chip 211 of the first device 210 and the electronic tag 221 of the second device 220 is less than the preset threshold, the first device 210 may directly obtain the Bluetooth address of the second device 220 from the electronic tag 221.

In this embodiment, the electronic tag 221 does not include the Bluetooth address of the second device 220, but includes only the tag ID of the electronic tag 221. Therefore, the first device 210 can obtain only the tag ID of the electronic tag 221 from the electronic tag 221, and then configure a correspondence between the tag ID and the Bluetooth address of the second device 220 based on a user operation, to obtain the Bluetooth address of the second device 220. Specifically, as shown in FIG. 10C-1 to FIG. 10C-4, S303 shown in FIG. 3A to FIG. 3C may include S1001 to S1005.

S1001. When the distance between the NFC chip 211 of the first device 210 and the electronic tag 221 of the second device 220 is less than the preset threshold, the first device 210 obtains the tag ID in the electronic tag 221.

The electronic tag 221 stores the tag ID of the electronic tag 221. Therefore, when the distance between the NFC chip 211 and the electronic tag 221 is less than the preset threshold, the NFC chip 211 may send an electromagnetic wave, and in response to the electromagnetic wave, the electronic tag 221 may send data stored in the electronic tag 221 to the NFC chip 211, for example, the tag ID in the electronic tag 221.

S1002. The first device 210 searches for the Bluetooth address corresponding to the tag ID.

The first device 210 may detect whether the first device 210 stores the Bluetooth address corresponding to the tag ID. If the first device 210 does not store the Bluetooth address corresponding to the tag ID, the first device 210 cannot find the Bluetooth address corresponding to the tag ID. If the first device 210 stores the Bluetooth address corresponding to the tag ID, the first device 210 can find the Bluetooth address corresponding to the tag ID. For a method in which the first device 210 stores the tag ID and the Bluetooth address corresponding to the tag ID, refer to subsequent descriptions in this embodiment of this application.

Specifically, if the first device 210 does not find the Bluetooth address corresponding to the tag ID, the first device 210 performs S1003. If the first device 210 finds the Bluetooth address corresponding to the tag ID, the first device 210 performs S1004.

S1003. The first device 210 searches for a surrounding Bluetooth device, and displays a fourth interface. The fourth interface includes at least one Bluetooth option, and each Bluetooth option corresponds to one Bluetooth device found by the first device 210.

It may be understood that, if the first device 210 does not find the Bluetooth address corresponding to the tag ID, the first device 210 may display the fourth interface. The fourth interface includes a Bluetooth option corresponding to at least one Bluetooth device found by the first device 210. In this way, the first device 210 can receive a selection operation performed by the user on any Bluetooth option (for example, a first Bluetooth option) in the fourth interface, and determine that the Bluetooth address corresponding to the tag ID is a Bluetooth address of a Bluetooth device corresponding to the first Bluetooth option selected by the user.

The Bluetooth device found by the first device 210 is a device with an enabled Bluetooth function around the first device 210, for example, the second device 220.

S1004. The first device 210 receives a selection operation performed by the user on the first Bluetooth option in the at least one Bluetooth option, where the first Bluetooth option corresponds to the second device 220.

For example, it is assumed that the first device 210 displays the first interface 401 shown in FIG. 4A. When the distance between the NFC chip 211 of the first device 210 and the electronic tag 221 is less than the preset threshold, the first device 210 may obtain the tag ID in the electronic tag 221. Assuming that the first device 210 does not store the Bluetooth address corresponding to the tag ID, the first device 210 cannot find the Bluetooth address corresponding to the tag ID. In this case, the first device 210 may search for a surrounding Bluetooth device, and display a fourth interface 1101 shown in FIG. 11.

It is assumed that a Bluetooth identifier of the second device 220 is "second device 220", and the first device 210 may find Bluetooth devices whose Bluetooth identifiers are "second device 220", "ABC", and "123456". If the first device 210 does not establish a Bluetooth connection to the second device 220, as shown in FIG. 11, the fourth interface 1101 includes a Bluetooth option 1103 "second device 220", a Bluetooth option 1104 "ABC", and a Bluetooth option 1105 "123456". If the first device 210 has established a Bluetooth connection to the second device 220, the Bluetooth option 1003 "second device 220" shown in FIG. 11 may be displayed as "connected" (not shown in the figure).

Optionally, the fourth interface may further include prompt information used to prompt the user to select a Bluetooth device for receiving the first file. For example, the fourth interface 1101 may include prompt information 1102 "Please select a Bluetooth device for receiving a photo".

S1005. In response to the selection operation performed by the user on the first Bluetooth option, the first device 210 obtains a Bluetooth address corresponding to the first Bluetooth option, where the Bluetooth address is the Bluetooth address of the second device 220.

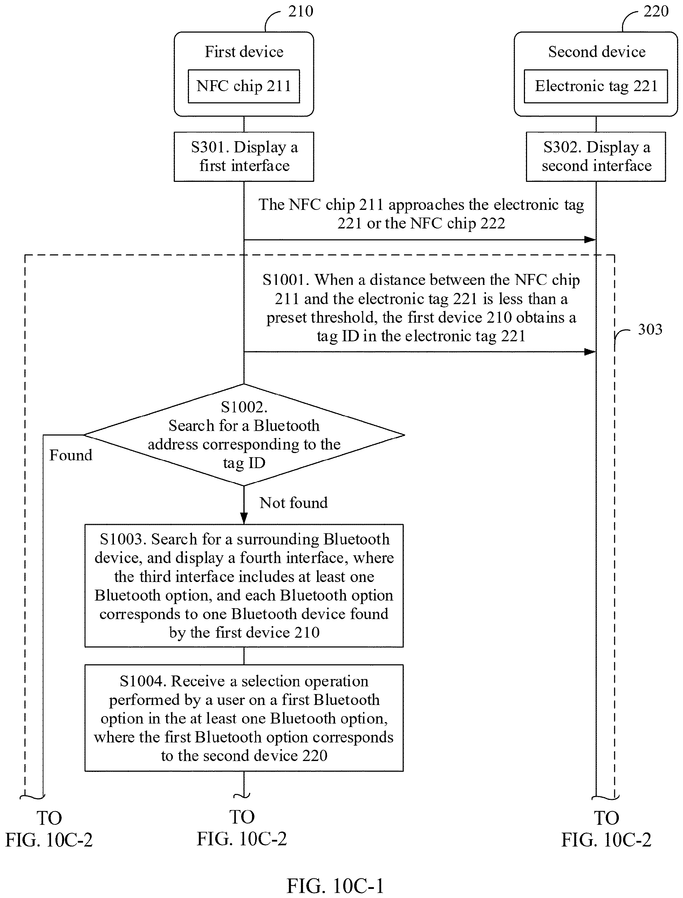

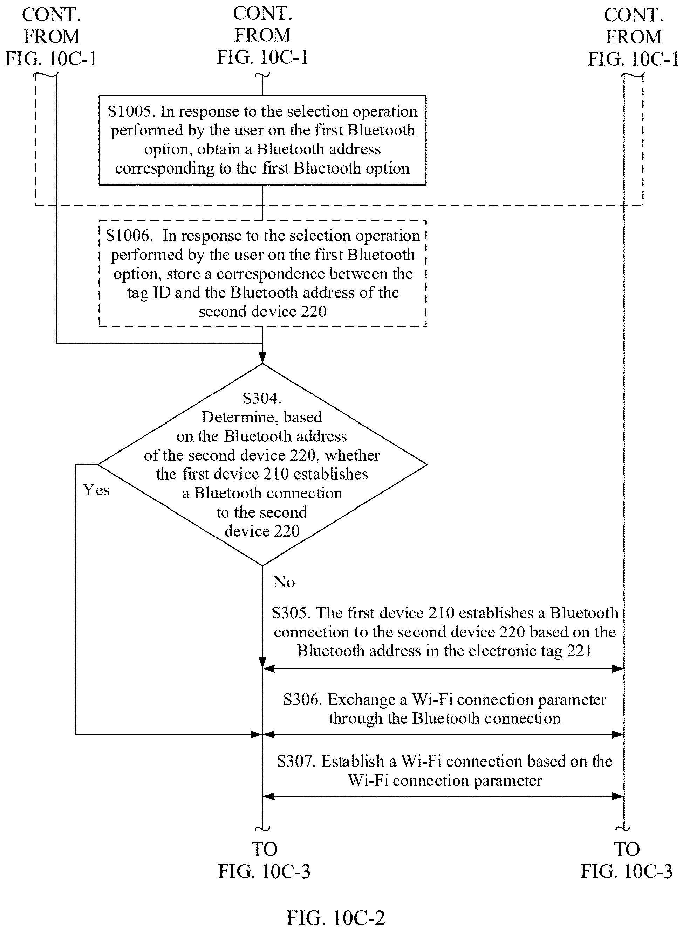

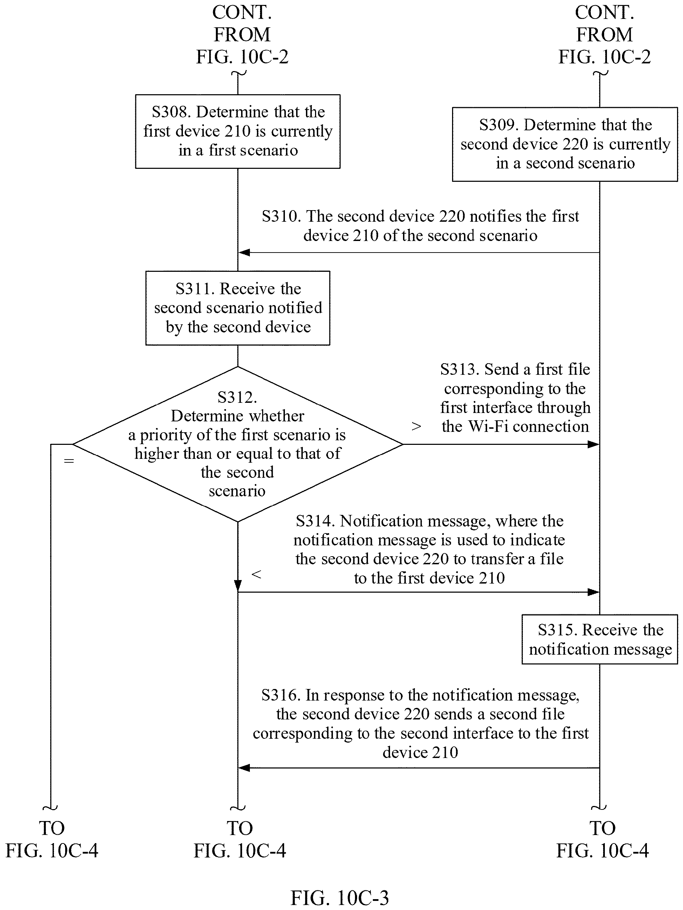

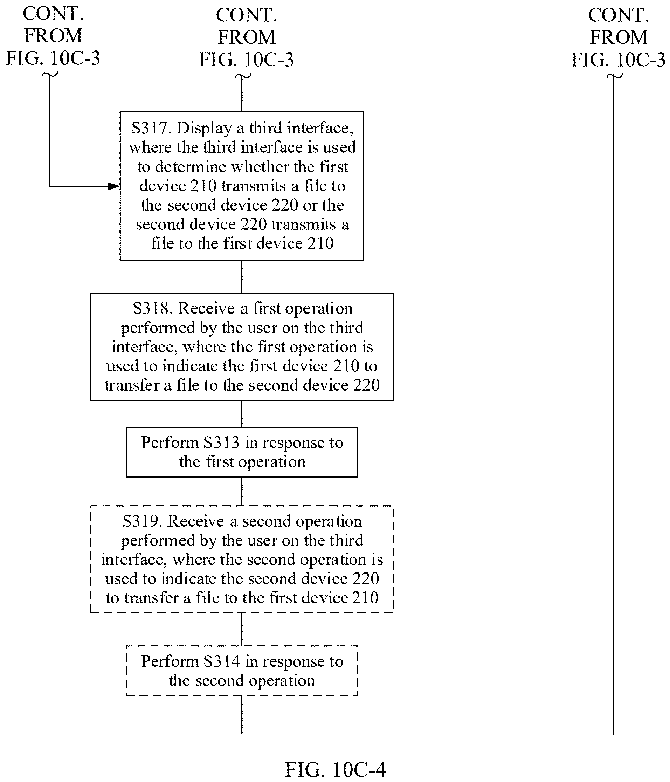

Optionally, in response to the selection operation performed by the user on the first Bluetooth option, the first device 210 may further store the correspondence between the tag ID and the Bluetooth address of the second device 220. In this way, after the NFC chip 211 of the first device 210 approaches the electronic tag 221 next time and obtains the tag ID of the electronic tag 221, the Bluetooth address corresponding to the tag ID can be found. As shown in FIG. 10, the method in this embodiment of this application may further include S1006.

S1006. In response to the selection operation performed by the user on the first Bluetooth option, the first device 210 stores the correspondence between the tag ID and the Bluetooth address of the second device 220.

With reference to the foregoing example, the first Bluetooth option may be the Bluetooth option 1103 "second device 220" shown in FIG. 11. The first device 210 may receive a selection operation (for example, a single tap operation, a double tap operation, or a touch and hold operation) performed by the user on the Bluetooth option 1103 "second device 220" shown in FIG. 11, and store the correspondence between the tag ID and the Bluetooth address of the second device 220.

It should be noted that the first device 210 may redisplay the first interface in response to the selection operation performed by the user on the first Bluetooth option. For example, the first device 210 may display the first interface 401 shown in FIG. 4A.

In some other embodiments, in response to the selection operation performed by the user on the first Bluetooth option, the first device 210 may not store the correspondence between the tag ID and the Bluetooth address of the second device 220, but transfer the Bluetooth address of the second device 220 to the electronic tag 221 of the second device 220 through the NFC chip 211. After receiving the Bluetooth address of the second device 220, the electronic tag 221 may store the Bluetooth address of the second device. In this way, when an NFC chip (for example, the NFC chip 211) of another electronic device approaches the electronic tag 221 (that is, when the distance between the NFC chip 211 and the electronic tag 221 is less than the preset threshold), the NFC chip 211 can directly obtain the Bluetooth address of the second device 220 from the electronic chip 221. That is, the first device 210 may perform the method shown in FIG. 3A to FIG. 3C, to transfer a file to the second device 220. For example, when the electronic tag 221 is an active tag, the electronic tag 221 has relatively large storage space, and the electronic tag 221 may store data (for example, the Bluetooth address of the second device 220) transferred by the NFC chip 211.

If the first device 210 finds the Bluetooth address corresponding to the tag ID, the first device 210 may determine whether the first device 210 establishes a Bluetooth connection to a device (that is, the second device 220) corresponding to the found Bluetooth address (that is, S304). If the first device 210 does not find the Bluetooth address corresponding to the tag ID, after displaying the fourth interface, in response to the selection operation performed by the user on the first Bluetooth option, the first device 210 may obtain the Bluetooth address corresponding to the first Bluetooth option, and then determine whether the first device 210 establishes a Bluetooth connection to a device (that is, the second device) corresponding to the Bluetooth address of the first Bluetooth option. That is, the first device 210 may perform S304.

In this embodiment of this application, the second device 220 does not need to be provided with an NFC chip, and a file can be transferred through NFC contact when the second device 220 is provided with an electronic tag. Costs of configuring the electronic tag are relatively low. Therefore, in this embodiment of this application, a file can be transferred through NFC contact without increasing hardware costs. In addition, for the user, as long as the NFC chip 211 approaches the electronic tag 221, the first device 210 can transfer a file to the second device 210, thereby simplifying user operations.

In addition, before the first device 210 or the second device 220 transfers a file, a file transfer direction may be determined based on the priorities of the scenarios in which the two electronic devices are located, to improve accuracy of the file transfer direction, avoid file mis-transfer, and improve file transfer accuracy.

Further, exchanging the Wi-Fi connection parameter through the Bluetooth connection can increase a speed of establishing the Wi-Fi connection, and improve file transfer efficiency. In addition, transferring the first file through the Wi-Fi connection can increase a file transfer rate.

In some other embodiments, after the first device 210 establishes the Bluetooth connection to the second device 220, the first device 210 or the second device 220 may directly transfer a file through the Bluetooth connection. To be specific, after the first device 210 and the second device 220 determine the file transfer direction and the first device 210 establishes the Bluetooth connection to the second device 220, the first device 210 may transfer the first file to the second device 221 through the Bluetooth connection.

According to the file transfer method provided in this embodiment of this application, a file can be conveniently transferred between two electronic devices (for example, a mobile phone and a PC) of the user. For example, when an NFC chip of the mobile phone of the user approaches an NFC chip or an electronic tag of the PC of the user, the mobile phone may automatically obtain a Bluetooth address of the PC, and then the mobile phone or the PC transfers a file through a communication connection (for example, a Bluetooth connection or a Wi-Fi connection) established based on the Bluetooth address.

With reference to the implementation (1), the plurality of preset scenarios include the scenario 1 and the scenario 2 shown in Table 1. The application identification information in the scenario 1 includes the application identification information of the at least one preset identifiable application. The application identification information in the scenario 2 includes the application identification information corresponding to the non-identifiable application. It is assumed that the first device 210 is currently in the scenario 1, and the second device 220 is currently in the scenario 2. The identifiable application is a "Gallery" application or a "Photos" application. In other words, the first interface displayed by the first device 210 is a graphical user interface of the "Gallery" application or the "Photos" application.

In some embodiments, the first interface displayed by the first device 210 may include image information of a plurality of files. The first file is one of the plurality of files. For example, the first interface may further include image information of the first file and image information of the second file. In this case, before the first device 210 transfers the first file to the second device 220, the user may select the first file from the first interface. Specifically, the first device 210 may display a fifth interface. The fifth interface includes information items that are in a one-to-one correspondence with the first file and the second file. The first device 210 may receive a selection operation performed by the user on a first information item. The first information item is an information item corresponding to the first file. In response to the selection operation performed by the user on the first information item, the first device 210 sends the second file corresponding to the first information item to the second device 220. The user may select one or more information items. In this way, the first device 210 can send, to the second device 220, one or more files corresponding to the one or more information items selected by the user.

A quantity of files transferred by the first device 210 to the second device 220 at a time cannot exceed a preset quantity of files. For example, the first device 210 may transfer a maximum of 500 pictures to the second device 220 at a time. If the user selects more than 500 information items, the first device 210 may send prompt information. The prompt information is used to prompt that a quantity of to-be-shared files cannot exceed the preset quantity of files.

In some embodiments, the file corresponding to the first information item selected by the user in the fifth interface may be stored in a cloud, and the first information item is a thumbnail of the corresponding file. In this case, the first device 210 may transfer a unique identifier of the file corresponding to the first information item to the second device 220, so that the second device 220 can obtain the file corresponding to the first information item from the cloud.

In some embodiments, after establishing the communication connection (the Wi-Fi connection or the Bluetooth connection) to the second device 220, the first device 210 may display the fifth interface and receive the selection operation performed by the user on the first information item. Alternatively, when the NFC chip 211 approaches the electronic tag 221 or the NFC chip 222, the first device 210 may display the fifth interface and receive the selection operation performed by the user on the first information item. In these embodiments, after establishing the communication connection, the first device 210 may automatically transfer, to the second device 220 through the communication connection, the first file corresponding to the first information item selected by the user.

In some other embodiments, after displaying the first interface, the first device 210 may receive a preset operation (for example, a preset gesture) performed by the user in the first interface. The first device 210 may display the fifth interface in response to the preset operation, and receive the selection operation performed by the user on the first information item. In a process in which the first device 210 displays the fifth interface and receives the selection operation performed by the user on the first information item, the NFC chip 211 may approach the electronic tag 221 or the NFC chip 222, to establish the communication connection. After establishing the communication connection, the first device 210 may automatically transfer, to the second device 220 through the communication connection, the first file corresponding to the first information item selected by the user in S603.

Optionally, the first information item may be an information item of an album folder including a plurality of photos or pictures. In this case, if a quantity of files (photos or pictures) in the album folder exceeds a preset quantity of files (for example, 500), the first device 210 may send prompt information. The prompt information is used to prompt that a quantity of to-be-shared files cannot exceed the preset quantity of files.

It should be noted that the premise that the first device 210 may transfer a picture in the album folder corresponding to the first information item to the second device 220 is that the album folder has a sharing function. To be specific, the photos or the pictures in the album folder are allowed to be shared with another electronic device. If the photos or the pictures in the album folder do not have a sharing function, that is, if the photos or the pictures in the album folder are not allowed to be shared with another electronic device, even if the NFC chip 211 approaches the electronic tag 221 or the NFC chip 222 and the communication connection is established, the first device 210 cannot transfer a photo or a picture in the album folder to the second device 220.

It may be understood that, to implement the foregoing functions, the electronic device (for example, the first device 210 or the second device 220) includes corresponding hardware structures and/or software modules for performing the functions. A person of ordinary skill in the art should easily be aware that, in combination with the examples described in the embodiments disclosed in this specification, units, algorithms, and steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the embodiments of this application.

In the embodiments of this application, the electronic device may be divided into function modules based on the foregoing method examples. For example, each function module may be obtained through division based on each corresponding function, or two or more functions may be integrated into one processing module. The integrated module may be implemented in the form of hardware, or may be implemented in the form of a software function module. It should be noted that, in the embodiments of this application, module division is an example, and is merely a logical function division. In actual implementation, another division manner may be used.

When an integrated unit is used, FIG. 12 is a possible schematic structural diagram of the electronic device 1200 in the foregoing embodiments. The electronic device 1200 may be the first device 212. The electronic device 1200 includes a processing module 1201, a display module 1202, and a communications module 1203. The communications module 1203 may include an NFC chip and/or an electronic tag, and a Bluetooth module. Optionally, the communications module 1203 may further include a Wi-Fi module.

The processing module 1201 is configured to control and manage an action of the electronic device 1200. The display module 1202 is configured to display an image generated by the processing module 1201. The communications module 1203 may be configured to support the electronic device 1200 in communicating with another device.

When the electronic device 1200 serves as the first device 210, the communications module 1203 may include an NFC chip (that is, a first NFC chip) and a Bluetooth module. Optionally, the communications module 1203 may further include a Wi-Fi module.

When the electronic device 1200 serves as the first device 210, the processing module 1201 may be configured to support the electronic device 1200 in performing the S303, S304, S306, S308, S601 to S609, S901 to S911, S311, S312, S313, S314, S318, S319, S1001, S1002, and the operation of "searching for a Bluetooth device" in S1003 in the foregoing method embodiments, and/or another process in the technology described in this specification.

The display module 1202 may be configured to support the electronic device 1200 in performing in S301, S317, the operation of "displaying the fourth interface" in S1003, S1004, and S1005 in the foregoing method embodiments, and/or another process in the technology described in this specification.

The NFC chip may be configured to approach an NFC chip (that is, a second NFC chip) or an electronic tag of the second device 220, and communicate with the NFC chip or the electronic tag of the second device 220, for example, support the processing module 1201 in performing the operation of "obtaining a Bluetooth address" in S303, support the processing module 1201 in performing an operation of "obtaining a tag ID" in S1001, and/or another process in the technology described in this specification.

The Bluetooth module may be configured to support the electronic device 1200 in performing S305, and/or another process in the technology described in this specification. The Wi-Fi module may be configured to support the electronic device 1200 in performing S307, and/or another process in the technology described in this specification.

When the electronic device 1200 serves as the second device 220, the communications module 1203 may include an NFC chip (that is, a second NFC chip) and/or an electronic tag, and a Bluetooth module. Optionally, the communications module 1203 may further include a Wi-Fi module.

When the electronic device 1200 serves as the second device 220, functions of the processing module 1201, the display module 1202, the Bluetooth module, and the Wi-Fi module are similar to the functions of the electronic device 1200 serving as the first device 210. Details are not described herein again in this embodiment of this application.

The NFC chip may be configured to approach the NFC chip (that is, the first NFC chip) of the first device 210 and communicate with the NFC chip of the first device 210. For example, the NFC chip may transfer a Bluetooth address of the second device to the NFC chip of the first device 210.

The electronic tag stores a tag ID of the electronic tag. Alternatively, the electronic tag stores a tag ID of the electronic tag and the Bluetooth address of the second device 220. The electronic tag may be configured to approach the NFC chip (that is, the first NFC chip) of the first device 210 and communicate with the NFC chip of the first device 210. For example, the electronic tag may transfer the Bluetooth address of the second device or the tag ID to the NFC chip of the first device 210.

Certainly, the unit modules in the electronic device 1200 include but are not limited to the processing module 1201, the display module 1202, and the communications module 1203. For example, the electronic device 1200 may further include a storage module. The storage module is configured to store program code and data of the electronic device 1200. In addition, the storage module may be further configured to support the electronic device 1200 in performing S1006 in the foregoing method embodiments, and/or another process in the technology described in this specification.

The processing module 1201 may be a processor or a controller, for example, may be a central processing unit (Central Processing Unit, CPU), a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processor may include an application processor and a baseband processor. The processor may implement or execute various example logical blocks, modules, and circuits described with reference to content disclosed in this application. The processor may alternatively be a combination of processors implementing a computing function, for example, a combination of one or more microprocessors, or a combination of the DSP and a microprocessor. The storage module may be a memory.

For example, the processing module 1201 may be one or more processors (the processor 110 shown in FIG. 1). The communications module 1203 includes a wireless communications module (the wireless communications module 160 shown in FIG. 1, where the wireless communications module 160 includes BT (that is, a Bluetooth module), a WLAN (for example, a Wi-Fi module), and NFC (that is, an NFC chip)). The wireless communications module may be referred to as a communications interface. The storage module may be a memory (the internal memory 121 shown in FIG. 1). The display module 1202 may be a touchscreen (the display 194 shown in FIG. 1, where the display 194 integrates a display panel and a touch panel). The electronic device 1200 provided in this embodiment of this application may be the electronic device 100 shown in FIG. 1. The one or more processor, the memory, the communications interface, the display, and the like may be connected together, for example, connected through a bus.

An embodiment of this application further provides a computer storage medium. The computer storage medium stores computer program code. When the processor executes the computer program code, the electronic device 1000 performs related method steps in any one of FIG. 3A to FIG. 3C, FIG. 6A and FIG. 6B, FIG. 9C-1 and FIG. 9C-2, or FIG. 10C-1 to FIG. 10C-4 to implement the method in the foregoing embodiments.

An embodiment of this application further provides a computer program product. When the computer program product is run on a computer, the computer is enabled to perform related method steps in any one of FIG. 3A to FIG. 3C, FIG. 6A and FIG. 6B, FIG. 9C-1 and FIG. 9C-2, or FIG. 10C-1 to FIG. 10C-4 to implement the method in the foregoing embodiments.

The electronic device 1200, the computer storage medium, and the computer program product provided in the embodiments of this application each are configured to perform the corresponding method provided above. Therefore, for beneficial effects that can be achieved by the electronic device 1200, the computer storage medium, and the computer program product, refer to the beneficial effects in the corresponding method provided above. Details are not described herein again.

The foregoing descriptions about implementations allow a person skilled in the art to understand that, for the purpose of convenient and brief description, only division into the foregoing function modules is used as an example for description. In actual application, the foregoing functions may be allocated to different function modules and implemented based on a requirement. In other words, an inner structure of an apparatus is divided into different function modules, to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

In addition, function units in the embodiments of this application may be integrated into one processing unit, or each of the units may exist alone physically, or two or more units may be integrated into one unit. The integrated unit may be implemented in the form of hardware, or may be implemented in the form of a software function unit.

When the integrated unit is implemented in the form of a software function unit and sold or used as an independent product, the integrated unit may be stored in a readable storage medium. Based on such an understanding, the technical solutions of this application essentially, or the part contributing to the prior art, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in the embodiments of this application. The foregoing storage medium includes any medium that can store program code, such as a USB flash drive, a removable hard disk, a ROM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A file transfer method, applied to a process of transferring a file between a first device and a second device, wherein the first device is provided with a first near field communication NFC chip, the second device is provided with an electronic tag or a second NFC chip, the electronic tag comprises device information of the second device, and the method comprises:
displaying, by the first device, a first interface, wherein the first interface is a graphical user interface of a first application;
when a distance between the first NFC chip and the electronic tag or the second NFC chip is less than a preset threshold, obtaining, by the first device, the device information of the second device;
determining, by the first device, that the first device is currently in a first scenario;
receiving, by the first device, a second scenario in which the second device is currently located and that is notified by the second device; and
when a priority of the first scenario is higher than that of the second scenario, automatically transferring, by the first device, a first file corresponding to the first interface to the second device through a communication connection established based on the device information; or
when a priority of the first scenario is lower than that of the second scenario, receiving, by the first device, a second file that corresponds to a second interface and that is automatically sent by the second device through a communication connection established based on the device information, wherein the second interface is a graphical user interface currently displayed by the second device.

2. The method according to claim 1, wherein the device information comprises a Bluetooth address of the second device or a tag ID used to obtain a Bluetooth address; and
the communication connection comprises a Bluetooth connection; or the communication connection comprises a wireless fidelity Wi-Fi connection; or the communication connection comprises a Bluetooth connection and a Wi-Fi connection.

3. The method according to claim 1, wherein the method further comprises:
displaying, by the first device, a third interface when the priority of the first scenario is the same as that of the second scenario, wherein the third interface is used to determine whether the first device transfers a file to the second device or the second device transfers a file to the first device;
receiving, by the first device, a first operation performed by a user in the third interface, wherein the first operation is used to indicate the first device to transfer a file to the second device; and
in response to the first operation, automatically transferring, by the first device, the first file corresponding to the first interface to the second device through the communication connection.

4. The method according to claim 3, wherein the method further comprises:
receiving, by the first device, a second operation performed by the user in the third interface, wherein the second operation is used to indicate the second device to transfer a file to the first device;
automatically sending, by the first device, a notification message to the second device in response to the second operation, wherein the notification message is used to indicate the second device to transfer a file to the first device; and
receiving, by the first device, the second file that corresponds to the second interface and that is sent by the second device through the communication connection.

5. The method according to any one of claims 1 to 4, wherein the first device stores scenario information and a priority of each of a plurality of preset scenarios; and
the scenario information comprises at least any one of application identification information and user operation information, and the plurality of scenarios comprise the first scenario and the second scenario.

6. The method according to claim 5, wherein the scenario information comprises the application identification information, and the determining, by the first device, that the first device is currently in a first scenario comprises:
obtaining, by the first device, application identification information of the first application to which the first interface belongs; and
when the application identification information of the first application matches application identification information in the first scenario, determining, by the first device, that the first device is currently in the first scenario.

7. The method according to claim 6, wherein the plurality of preset scenarios comprise a scenario 1 and a scenario 2, and a priority of the scenario 1 is higher than that of the scenario 2;
application identification information in the scenario 1 comprises application identification information of at least one preset identifiable application; and
application identification information in the scenario 2 comprises application identification information corresponding to a non-identifiable application.

8. The method according to claim 5, wherein the scenario information comprises the user operation information, and the determining, by the first device, that the first device is currently in a first scenario comprises:
obtaining, by the first device, user operation information corresponding to the first interface, wherein the user operation information corresponding to the first interface comprises a moment at which the first device starts to display the first interface, or a moment at which the first device starts to display the first interface and a user operation received after the first device displays the first interface, or a user operation received by the first device within a third preset time period, wherein an end moment of the third preset time period is the current moment; and
when the user operation information corresponding to the first interface matches user operation information in the first scenario, determining, by the first device, that the first device is currently in the first scenario.

9. The method according to claim 8, wherein the user operation information corresponding to the first interface comprises the moment at which the first device starts to display the first interface, or the moment at which the first device starts to display the first interface and the user operation received after the first device displays the first interface;
the plurality of preset scenarios comprise a scenario 1, a scenario 2, a scenario 3, and a scenario 4, a priority of the scenario 1 is higher than that of the scenario 2, the priority of the scenario 2 is higher than that of the scenario 3, and the priority of the scenario 3 is higher than that of the scenario 4;
user operation information in the scenario 1 comprises: an electronic device receives, within a first preset time period, a third operation used to trigger the electronic device to display a current interface, wherein the first preset time period is a time period before a first moment, an end moment of the first preset time period is the first moment, and the first moment is a moment at which the electronic device displays the current interface;
user operation information in the scenario 2 comprises: the electronic device receives, within a second preset time period, the third operation used to trigger the electronic device to display the current interface, and the electronic device receives a fourth operation after displaying the current interface, wherein the second preset time period is another time period before the first preset time period, and an end moment of the second preset time period is a start moment of the first preset time period;
user operation information in the scenario 3 comprises: the electronic device receives, within the second preset time period, the third operation used to trigger the electronic device to display the current interface, and the electronic device does not receive the fourth operation after displaying the current interface; and
user operation information in the scenario 4 comprises: the electronic device receives a fifth operation on a message from another electronic device, and the electronic device displays the current interface in response to the fifth operation.

10. The method according to claim 8, wherein the user operation information corresponding to the first interface comprises the user operation received by the first device within the third preset time period, wherein the end moment of the third preset time period is the current moment;
the plurality of preset scenarios comprise a scenario 1 and a scenario 2, and a priority of the scenario 1 is higher than that of the scenario 2;
user operation information in the scenario 1 comprises: an electronic device receives a user operation within the third preset time period; and
user operation information in the scenario 2 comprises: the electronic device does not receive a user operation within the third preset time period.

11. The method according to claim 8 or 9, wherein the determining, by the first device when the user operation information corresponding to the first interface matches user operation information in the first scenario, that the first device is currently in the first scenario comprises:
if the user operation information corresponding to the first interface indicates that the first device receives, within the first preset time period, the third operation used to trigger the first device to display the first interface, determining, by the first device, that the first device is currently in the scenario 1, wherein the first scenario is the scenario 1;
if the user operation information corresponding to the first interface indicates that the first device displays the first interface in response to the fifth operation, determining, by the first device, that the first device is currently in the scenario 4, wherein the first scenario is the scenario 4;
if the user operation information corresponding to the first interface indicates that the first device receives, within the second preset time period, the third operation used to trigger the first device to display the first interface, and the first device receives the fourth operation after displaying the first interface, determining, by the first device, that the first device is currently in the scenario 2, wherein the first scenario is the scenario 2; and
if the user operation information corresponding to the first interface indicates that the first device receives, within the second preset time period, the third operation used to trigger the first device to display the first interface, and the first device does not receive the fourth operation after displaying the first interface, determining, by the first device, that the first device is currently in the scenario 3, wherein the first scenario is the scenario 3.

12. The method according to claim 5, wherein the scenario information comprises the application identification information and the user operation information, and the determining, by the first device, that the first device is currently in a first scenario comprises:
obtaining, by the first device, application identification information of the first application;
obtaining, by the first device, user operation information corresponding to the first interface, wherein the user operation information corresponding to the first interface comprises a moment at which the first device starts to display the first interface, or a moment at which the first device starts to display the first interface and a user operation received after the first device displays the first interface; and
when the application identification information of the first application matches application identification information in the first scenario and the user operation information corresponding to the first interface matches user operation information in the first scenario, determining, by the first device, that the first device is currently in the first scenario.

13. The method according to claim 12, wherein the plurality of preset scenarios comprise two or more of the following scenarios: a scenario 1, a scenario 2, a scenario 3, a scenario 4, and a scenario 5;
a priority of the scenario 1 is higher than that of the scenario 2, the priority of the scenario 2 is higher than that of the scenario 3, the priority of the scenario 3 is higher than that of the scenario 4, and the priority of the scenario 4 is higher than that of the scenario 5;
application identification information in the scenario 1 comprises application identification information of at least one preset identifiable application, and user operation information in the scenario 1 comprises: an electronic device receives, within a first preset time period, a third operation used to trigger the electronic device to display a current interface, wherein the first preset time period is a time period before a first moment, an end moment of the first preset time period is the first moment, and the first moment is a moment at which the electronic device displays the current interface;
application identification information in the scenario 2 comprises the application identification information of the at least one preset identifiable application, and user operation information in the scenario 2 comprises: the electronic device receives, within a second preset time period, the third operation used to trigger the electronic device to display the current interface, and the electronic device receives a fourth operation after displaying the current interface, wherein the second preset time period is another time period before the first preset time period, and an end moment of the second preset time period is a start moment of the first preset time period;
application identification information in the scenario 3 comprises the application identification information of the at least one preset identifiable application, and user operation information in the scenario 3 comprises: the electronic device receives, within the second preset time period, the third operation used to trigger the electronic device to display the current interface, and the electronic device does not receive the fourth operation after displaying the current interface;
application identification information in the scenario 4 comprises application identification information corresponding to a non-identifiable application, and user operation information in the scenario 4 has no requirement on whether the electronic device receives a user operation or a moment at which the electronic device receives a user operation; and
application identification information in the scenario 5 comprises the application identification information of the at least one preset identifiable application, and user operation information in the scenario 5 comprises: the electronic device receives a fifth operation on a message from another electronic device, and the electronic device displays the current interface in response to the fifth operation.

14. The method according to claim 13, wherein the determining, by the first device when the application identification information of the first application matches application identification information in the first scenario and user operation information corresponding to the first interface matches user operation information in the first scenario, that the first device is currently in the first scenario comprises:
determining, by the first device, whether the application identification information of the first application matches the identification information of the identifiable application; and
when the application identification information of the first application does not match the application identification information of the identifiable application, determining, by the first device, that the first device is currently in the scenario 4, wherein the first scenario is the scenario 4;
or,
when the application identification information of the first application matches the application identification information of any one of the at least one identifiable application,
if the user operation information corresponding to the first interface indicates that the first device receives, within the first preset time period, the third operation used to trigger the first device to display the first interface, determining, by the first device, that the first device is currently in the scenario 1, wherein the first scenario is the scenario 1;
if the user operation information corresponding to the first interface indicates that the first device displays the first interface in response to the fifth operation, determining, by the first device, that the first device is currently in the scenario 5, wherein the first scenario is the scenario 5;
if the user operation information corresponding to the first interface indicates that the first device receives, within the second preset time period, the third operation used to trigger the first device to display the first interface, and the first device receives the fourth operation after displaying the first interface, determining, by the first device, that the first device is currently in the scenario 2, wherein the first scenario is the scenario 2; and
if the user operation information corresponding to the first interface indicates that the first device receives, within the second preset time period, the third operation used to trigger the first device to display the first interface, and the first device does not receive the fourth operation after displaying the first interface, determining, by the first device, that the first device is currently in the scenario 3, wherein the first scenario is the scenario 3.

15. An electronic device, comprising at least one processor, and a memory, wherein
the memory is configured to store one or more computer programs; and
when the one or more computer programs stored in the memory are executed by the at least one processor, the electronic device is enabled to implement the method according to any one of claims 1 to 14.
